(19) Europäisches Patentamt
European Patent Office
Office européen des brevets

(11) **EP 0 394 932 B1**

(12) **EUROPÄISCHE PATENTSCHRIFT**

(45) Veröffentlichungstag und Bekanntmachung des Hinweises auf die Patenterteilung:
**04.03.1998 Patentblatt 1998/10**

(51) Int Cl.$^6$: **G01N 21/17**, G01N 25/72

(21) Anmeldenummer: **90107682.8**

(22) Anmeldetag: **23.04.1990**

(54) **Photothermisches Untersuchungsverfahren, Einrichtung zu seiner Durchführung und Verwendung des Verfahrens**

Photothermal inspection method, arrangement for its working out, and utilisation of the method

Procédé d'inspection par effet photothermal, dispositif pour sa mise en oeuvre et utilisation du procédé

(84) Benannte Vertragsstaaten:
**AT BE CH DE ES FR GB IT LI NL SE**

(30) Priorität: **24.04.1989 DE 3913474**

(43) Veröffentlichungstag der Anmeldung:
**31.10.1990 Patentblatt 1990/44**

(73) Patentinhaber:
• **SIEMENS AKTIENGESELLSCHAFT**
**80333 München (DE)**
Benannte Vertragsstaaten:
**AT BE CH DE ES FR GB IT LI NL SE**
• **Petry, Harald, Dr.**
**D-66130 Saarbrücken (DE)**
Benannte Vertragsstaaten:
**DE**

(72) Erfinder:
• **Winschuh, Erich**
**D-6078 Neu-Isenburg 2 (DE)**
• **Petry, Harald, Dr.**
**D-6604 Fechingen (DE)**

(74) Vertreter: **Fuchs, Franz-Josef, Dr.-Ing. et al**
**Postfach 22 13 17**
**80503 München (DE)**

(56) Entgegenhaltungen:
EP-A- 0 105 078          WO-A-82/00891
DE-A- 3 204 146          US-A- 3 803 413

• **B.EDMUNDS ET AL. 'IEEE INTERNATIONAL ELECTRONIC MANUFACTURING TECHNOLOGY SYMPOSIUM' 15. September 1986, NEW YORK**
• **S.SHEARD 'IEEE ULTRASONICS SYMPOSIUM OF WILLIAMSBURG' 19. November 1986 , NEW YORK**

## Beschreibung

Die Erfindung bezieht sich auf ein Verfahren zum Untersuchen der Eigenschaften von Materialien nach dem photothermischen Effekt, wie sie etwa aus EP-A-105078, US-A-3,803,413 oder auch WO-A-8200891 bekannt sind.

Das Grundprinzip von photothermischen Untersuchungs- oder Meßverfahren basiert auf der Bestrahlung einer Prüfoberfläche mit Licht, insbesondere mit Laserlicht, und Auswertung der dadurch in den oberflächen-nächsten Schichten erzeugten Wärmesignale. Dabei wird die Tatsache genutzt, daß ein im Verhältnis zu seiner Umgebung erwärmter Körper immer bestrebt ist, dieses Mehr an Wärme abzugeben: Der Körper gibt Wärme in Form von Infrarot-Strahlung ab. Das Verfahren ist grundsätzlich auch dann anwendbar, wenn die Temperatur der Umgebung höher ist als die des Prüflings, weil es auf die Temperaturverteilung an der Prüfling-Oberfläche ankommt. Durch Messung der vom Prüfling emittierten Infrarot-(IR-) Lichtsignale können Tiefeninformationen und Informationen über die Materialbeschaffenheit der Oberfläche gewonnen werden, z.B. können ermittelt werden: Änderungen der Schichtdicken von Oberflächen, aber auch Risse, Einschlüsse und Delaminationen, dies alles naturgemäß zerstörungs- und berührungsfrei. Die Erfindung geht von den grundsätzlich bekannten Verfahrensschritten aus, mit einer intensiven Lichtquelle, insbesondere einem Laser, die Oberfläche der Materialprobe zu bestrahlen, wobei der Strahl bei einer Reihe von photothermischen Untersuchungsverfahren moduliert, d.h., insbesondere periodisch unterbrochen wird. Das Laserlicht wird an der Oberfläche teilweise in Wärme umgewandelt. Diese Wärme dringt in die Materialprobe ein. Ein Charakteristikum für das aus emittierten IR-Lichtsignalen gebildete Meßsignal ist, wie weit die Wärme eindringt. Dies hängt zum einen von der periodischen Bestrahlungsdauer ab, diese wird durch die Modulationsfrequenz bestimmt, zum anderen von den Materialeigenschaften Wärmeleitfähigkeit, spezifische Wärme und Dichte. Die letztgenannten drei Parameter werden zu einer physikalischen Größe, der thermischen Diffusionslänge $\mu_S$, zusammengefaßt. Sie gibt direkt die Eindringtiefe der Wärmewellen an. Es gilt

$$\mu_S = \sqrt{(2a/\omega)},$$

mit

| | |
|---|---|
| $\omega =$ | Kreisfrequenz der Modulation des intensitätsmodulierten Laserstrahls |
| $a =$ | Temperaturleitfähigkeit, wobei für a gilt: |
| $a =$ | $k/\rho \cdot c$, mit |
| $c =$ | spezifische Wärme |
| $\rho =$ | Dichte |
| $k =$ | Wärmeleitfähigkeit des Prüflings. |

Durch die EP-A1-0 105 078 ist eine Einrichtung zur Durchführung des geschilderten Verfahrens zum Untersuchen der Eigenschaften von absorptionsfähigen Materialien nach dem photothermischen Effekt bekannt, bei welcher von einem stationären oder quasi-stationären Laser die Laserwellen zu einem an die Materialprobe optisch ankoppelbaren Prüfkopf mittels flexibler Lichtwellenleiterkabel transportierbar sind. Außerdem können von dem Prüfkopf die IR-Lichtsignale zu einem entfernt vom Prüfkopf angeordneten Infrarot-Detektor ebenfalls über flexible Lichtwellenleiterkabel transportiert werden. Der Meßkopf selbst enthält gehäuse-interne strahlführende Mittel, und zwar am Eingang der Laserstrahlen und am Ausgang der IR-Lichtsignale, hier je eine Fokussier-linse, ferner einen im Strahlenweg beider Linsen angeordneten Koppelspiegel, ausgebildet als dichroitischer Spiegel [1]. Weiterhin ist in dem für die Laserstrahlen und die IR-Lichtsignale gemeinsamen Lichtweg eine Kristallstange, insbesondere aus Saphir bestehend, angeordnet und dieser Stange nachgeschaltet eine Fokussierlinse, welche die Laserstrahlung auf die Materialprobe fokussiert bzw. von dieser die IR-Lichtsignale empfängt. Die Lichtwellenleiter stellen bei der Materialuntersuchung ein empfindliches Element dar; außerdem dämpfen sie die in ihnen transportierte Laserstrahlung bzw. die IR-Lichtsignale.

Der Erfindung liegt die Aufgabe zugrunde, ein Verfahren zum Untersuchen der Eigenschaften von Materialien nach dem photothermischen Effekt zu schaffen, mit welchem ohne die Leitung der Laserwellen über Lichtwellenleiter von einem externen stationären oder quasi-stationären Laser zu dem Meßkopf und ohne eine Verbindung von einem externen Infrarotlicht-Detektor zu dem Meßkopf über Lichtwellenleiterkabel ausgekommen werden kann. Eine weitere Aufgabe der Erfindung besteht darin, die Führung des Laserstrahls von der Laserlichtquelle einerseits bis zur Materialprobe andererseits sowie die Führung der IR-Lichtsignale von der Materialprobe zum Infrarotlicht-Detektor so zu gestalten, daß sich möglichst kurze Strahlwege ergeben und die Möglichkeit eröffnet ist, eine zweite Laserlichtquelle einzukoppeln.

[1] Ein dichroitischer Spiegel (dichroic beam splitter) wirkt als Strahlenteiler, der einen Wellenlängenbereich der auf ihn fallenden Strahlung bzw. Lichtstrahlung reflektiert und einen anderen Wellenlängenbereich durchläßt. Solche dichroitischen Spiegel werden z.B. auch als Farbteiler für die Farbfernsehübertragung verwendet.

Die gestellte Aufgabe wird bei dem eingangs genannten Verfahren zum Untersuchen der Eigenschaften von Materialien nach dem photothermischen Effekt durch die Verfahrensmerkmale gemäß Anspruch 1 gelöst.

Vorteilhafte Weiterbildungen dieses Verfahrens nach der Erfindung sind in den Patentansprüchen 2 bis 17 sowie 39 angegeben.

Gegenstand der Erfindung sind auch mehrere vorteilhafte Verwendungen dieses Verfahrens gemäß den Patentansprüchen 18 bis 22. So kann das Verfahren nach der Erfindung verwendet werden im Rahmen der zerstörungsfreien Werkstoffprüfung zur Detektion von Materialinhomogenitäten, Materialfehlern, Delaminationen sowie Korrosions- und Erosionserscheinungen, zum Beispiel zur

- Detektion von Zeitstandschädigungen, in Form von Cavities in metallischen Werkstoffen,
- zur Kontrolle auf Fehler an

    -- Elektrobauteilen, wie Chips, Halbleitern, Solarzellen,
    -- Lötstellen,
    -- Erzeugnissen der Papierindustrie auf Dicke, Faserverteilung, Haftung,
    -- Erzeugnissen der Kunststoffindustrie auf Porositäten, Faser- verteilung und Orientierung und

- zur Prozeßkontrolle.

Das Verfahren kann auch verwendet werden zur Ermittlung von Materialstrukturen, Materialkenngrößen, wie zum Beispiel Dichte, Leitfähigkeit, Härtegrad, und zur Ermittlung von Materialzuständen.

Eine weitere vorteilhafte Verwendung besteht in der Messung von Schichtdicken, Belegungen, Oberflächenqualitäten, zum Beispiel Rauhtiefen, und zur Messung der Haftung von Beschichtungen.

Eine spezielle Verwendung des Verfahrens erstreckt sich auf die Spurensuche, z.B. auf Fingerabdrücke. Das Verfahren ist gemäß einer weiteren Verwendung auch geeignet zum Aufspüren und Aufdecken von Fälschungen, z. B. bei Banknoten, Gemälden, Metall-Legierungen, Münzen, Keramiken und antiken Möbeln.

Gegenstand der Erfindung ist ferner eine vorteilhafte Einrichtung gemäß Patentanspruch 23 zur Durchführung des Verfahrens nach den Verfahrensansprüchen 1 bis 17 welchen die zum Gegenstand des Anspruchs 1 erläuterte Aufgabenstellung zugrundeliegt.

Vorteilhafte Weiterbildungen zum Gegenstand des Anspruchs 23 sind in den Ansprüchen 24 bis 37 angegeben, ferner eine bevorzugte Ausführungsform eines Wärmemikroskops im nebengeordneten Anspruch 38.

Die mit der Erfindung erzielbaren Vorteile sind vor allem darin zu sehen, daß nun Laserlichtquellen verhältnismäßig geringer Leistung und kleiner Bauform eingesetzt werden können, weil die Meßkopf-externe und/oder Meßkopf-interne Dämpfung der Laserstrahlen durch die Lichtwellenleiter und ihre Einkoppelmechanik sowie Einkoppeloptik entfällt. So kann z.B. ein diodengepumpter Neodym/YAG-Laser mit einer Wellenlänge von 1064 nm, welcher unsichtbares Licht im nahen Infrarotbereich abstrahlt, verwendet werden, welcher eine Leistung von nur 0,35 W hat, wobei ein kombinierter Transmissions- und Reflexionsgrad für den Laserstrahl von 82,9 % erreicht werden konnte. Im Inneren des Meßkopfes ergibt sich eine sehr präzise Strahlführung, was im Sinne einer Verbesserung der Genauigkeit und der Empfindlichkeit wirkt. Für die Einrichtung zur Durchführung des Verfahrens nach der Erfindung ergeben sich eine Mehrzahl von vorteilhaften Ausgestaltungsmöglichkeiten. So kann in das Gehäuse des Meßkopfes ein weiterer Laser in Form eines Pilotlasers integriert werden, der bevorzugt ein Diodenlaser, ebenfalls geringer Leistung, ist, der z.B. im sichtbaren Rotlichtbereich mit einer Wellenlänge von 670 nm und einer Leistung von 3 mW abstrahlt. Zur Einkopplung des Pilotstrahls ist eine Ausführung günstig, bei der der Laserstrahl, welcher zunächst achsparallel zum Pilotstrahl verläuft, über zwei hintereinander geschaltete Umlenkspiegel um je 90° umgelenkt wird, wobei nach der zweiten Umlenkung der Laserstrahl und der Pilotstrahl auf der gleichen Lichtbahn sind, d.h., der zweite Umlenkspiegel ist hierzu insbesondere als dichroitischer Spiegel auszubilden, welcher auf seiner reflektierenden Seite den Laserstrahl in seinen weiteren Strahlenweg schickt und der auf seiner anderen Seite den Pilotstrahl empfängt und diesen wie ein durchlässiges Fenster praktisch verlustfrei durchläßt. Der Pilotstrahl ist sehr vorteilhaft zum Einjustieren des Meßkopfes, indem durch ihn z.B. ein roter Lichtfleck auf die Materialprobe geworfen wird und nun nach diesem roten Lichtfleck die Scan-Zone gewählt werden kann. Weiterhin ist es günstig, nach dem zweiten Umlenkspiegel, also innerhalb des gemeinsamen Lichtweges für Pilot- und Laserstrahl, eine Optik anzuordnen, die zusammen mit der unmittelbar am Laserausgang angeordneten Optik eine Aufweitoptik bildet, welche vorteilhaft auf kurzem Strahlweg paralleles Laserlicht erzeugt. Die Aufweitoptik besteht also aus einer Laserausgangsseitigen ersten Optik, welche die Strahldivergenz erhöht, und der vorgenannten, dem zweiten Umlenkspiegel nachgeschalteten zweiten Optik, welche das Laserlicht parallelisiert. Optisch nachgeschaltet ist dieser Aufweitoptik dann der Koppelspiegel, von dem der Laserstrahl und der Pilotstrahl über die Scanner-Anordnung in die Achse der laserstrahl-endseitigen lichtleitenden Optik geworfen werden. Letztere ist eine Linse oder ein Linsensystem besonderer Eigenschaften, welche den Laserstrahl (und natürlich auch den Pilotstrahl) in Richtung auf die Materialprobe durchläßt oder transmittiert. In der entgegengesetzten Richtung läßt

EP 0 394 932 B1

dieses Linsensystem die IR-Lichtsignale durch. Geeignet für diese Zwecke ist ein Zink-Selenid-Glas mit einer frontseitigen Beschichtung. Diese frontseitige Beschichtung hat die Aufgabe, die IR-Lichtdurchlässigkeit in einem bestimmten Spektralbereich zu verbessern, z.B. im Bereich 2 - 5 µm. Durch eine andere Auslegung (Linsenform, Material und Beschichtungsauswahl) ist es jedoch auch möglich, diese Verbesserung auf einen größeren Bereich auszudehnen, insbesondere den Bereich 8 - 12 µm ("zweites IR-Fenster").

Der Meßkopf weist in der Strahlenachse des Koppelspiegels und des ersten Scanner-Anordnung - in Richtung der von der Materialprobe her ankommenden IR-Lichtsignale gesehen - einen nachgeschalteten IR-Umlenkspiegel auf, welcher die IR-Lichtsignale z.B. um 90° durch ein diesem Umlenkspiegel nachgeschaltetes Infrarotobjektiv auf den wenigstens einen Infrarot-Detektor weiterleitet, wobei das Infrarotobjektiv die IR-Lichtsignale auf die Empfangsflächen des genannten IR-Detektors fokussiert. Der genannte IR-Umlenkspiegel kann eine Normalausführung aufweisen, wenn er lediglich zur Reflexion der IR-Lichtsignale dient, die von der Materialprobe über die Scanner-Anordnung und den Koppelspiegel ihm zugeleitet werden. Soll über diesen IR-Umlenkspiegel jedoch auch IR-Strahlung eingekoppelt werden, die von einem Zusatzaggregat im Falle der Durchstrahlungsprüfung über dessen internes Spiegelsystem zugeführt wird, dann ist es zweckmäßig, diesen IR-Umlenkspiegel so auszuführen und anzuordnen, daß er in Bezug auf den zweiten Lichtweg als ein durchlässiges Fenster wirkt und im Bezug auf den ersten IR-Lichtweg als ein Spiegel.

Der Laserlichtquelle ist, wie erwähnt, zweckmäßigerweise eine Aufweitoptik für den Laserstrahl zugeordnet. Die Scanner-Anordnung weist bevorzugt zwei Scanner-Spiegel auf, welche von zugehörigen Antrieben so bewegt werden, daß der eine Scanner-Spiegel der Strahlablenkung in x-Richtung und der andere der Strahlablenkung in y-Richtung dient.

Der Meßkopf kann noch - wie bereits angedeutet - durch ein Zusatzaggregat ergänzt werden, welches - bei Materialproben hinreichend geringer Wanddicke -hinter der Materialprobe positioniert wird und die von der Rückseite der Materialprobe emittierte IR-Strahlung bzw. entsprechende IR-Lichtsignale empfängt und über ein internes Umlenk-Spiegelsystem verfügt, welches die IR-Lichtsignale in den IR-Strahlengang des eigentlichen Meßkopfes sendet bzw. reflektiert.

Im folgenden werden anhand mehrerer in der Zeichnung dargestellter Ausführungsbeispiele zunächst eine Einrichtung zur Durchführung des Verfahrens nach der Erfindung, sodann das Verfahren selbst sowie weitere Vorteile und Einzelheiten erläutert. In der Zeichnung zeigen in zum Teil vereinfachter, schematischer Darstellung:

FIG 1      eine Einrichtung nach der Erfindung, aufgegliedert in die rechts dargestellte Materialprobe, den in der Mitte dargestellten Meßkopf und die im linken Teil gezeigten transportable elektronische Schrankeinheit, wobei eine Blockschaltbild-Darstellung gewählt ist;

FIG 2      in isometrischer Darstellung einer Computergraphik das Innere des Meßkopfes in detaillierterer Darstellung der strahlführenden Mittel;

FIG 3      die Außenansicht auf eine Einrichtung nach der Erfindung in fotografischer Perspektive, wobei in Abwandlung zu FIG 1 die elektronische Schrankeinheit nicht in Turmbauweise, sondern in Flachbauweise angeordnet ist;

FIG 4      den Gegenstand nach FIG 3 mit einer in Turmbauweise angeordneten Schrankeinheit;

FIG 5      eine Ansicht des portablen Meßkopfes von oben;

FIG 6      eine Darstellung des Meßkopfes bei Betrachtung in Richtung A' von FIG 3 bzw. FIG 4;

FIG 7      einen Schnitt nach der Schnittebene VII-VII aus FIG 5 und

FIG 8      ein Diagramm, welches auf dem Farbmonitor der elektronischen Schrankeinheit dargestellt wurde, wobei die Länge der Abszissenachse des Diagramms 300 µm und die Ordinatenachse 400 µm repräsentiert und wobei Mikroporen verschiedener Größe dargestellt sind, welche an zeitstandsbeanspruchten Rohrleitungen festgestellt wurden;

FIG 9      schematisch in Draufsicht den Meßkopf in einer Abwandlung mit angebauter Stromversorgungseinheit und

FIG 10     eine weitere Abwandlung des Meßkopfes in Draufsicht schematisch, wobei ein Zusatzaggregat zur Ausmessung von Materialproben relativ geringer Wanddicke an den eigentlichen Meßkopf angebaut ist;

FIG 11    perspektivisch-schematisch drei verschiedene Anstrahl- und Abtast-Bahnmuster, die mittels x-/y-Ablenkung verwirklicht werden können.

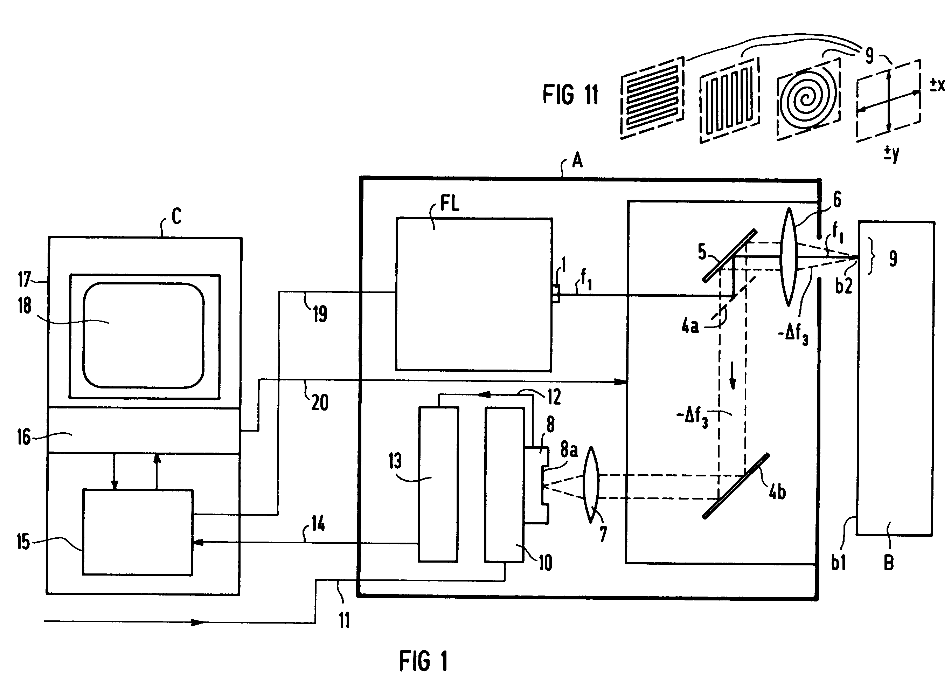

Figur 1 zeigt in drei Blöcken die wesentlichen Elemente des Verfahrens zum Untersuchen der Eigenschaften von absorptionsfähigen Materialien, in diesem Falle der Materialprobe B, nach dem photothermischen Effekt und der Einrichtung zu seiner Durchführung. Der Meßkopf A, durch schwarze Umrandung hervorgehoben, ist als integraler Lasermeßkopf ausgeführt. Er enthält einen direkt modulierten, diodengepumpten Neodym/YAG-Laser FL, der im Wellenlängenbereich 1064 nm, d.h. im unsichtbaren nahen IR-Bereich, abstrahlt, und eine Leistung von ca. 0,35 W aufweist. Diese Laserlichtquelle FL, im folgenden abgekürzt als Laser bezeichnet, ist durch ein Quadrat schematisch angedeutet. Über eine Aufweitoptik 1 gelangt der Laserstrahl $f_1$ zu einem dielektrischen Spiegel 4a, welcher den Laserstrahl $f_1$ um 90° in Richtung auf eine Scanner-Spiegelanordnung 5 umlenkt. Von dieser gelangt der Laserstrahl über eine laserstrahl-endseitige lichtleitende Optik 6, dargestellt als eine Konvex-Linse, welche zugleich das Austrittsfenster für die Laserstrahlung $f_1$ des Meßkopfes A und das Eintrittsfenster für die IR-Lichtsignale bildet, fokussiert auf die Frontfläche bl der Materialprobe B, und zwar in einem Meßpunkt b2. Oberhalb der Materialprobe B sind in Figur 11 zwei Koordinatenachsen $\pm$ x und $\pm$ y dargestellt, welche das Ablenksystem zur Strahlablenkung oder Meßpunktabtastung gemäß einem Anstrahl-Bahnmuster bzw. einem entsprechenden Abtast-Bahnmuster für die emittierte IR-Strahlung symbolisieren sollen. Das Anstrahl- und das Abtastbahnmuster verlaufen vorzugsweise in horizontalen oder vertikalen Mäandern oder in spiraligen Bahnen, wie schematisch angedeutet. Auch andere Anstrahl- und Abtast-Bahnmuster sind möglich, z. B. konzentrische Kreise. Die beiden Koordinatenachsen $\pm$ x und $\pm$ y sind gestrichelt umrahmt von einer Linie 9, welche z.B. eine Scan-Zone sein kann. Aufgrund der auftreffenden Laserstrahlung, welche nach einem bestimmten Puls-Pausen-Verhältnis moduliert sein kann und im jeweiligen Meßpunkt eine Wärmemenge, die eine Energie von z.B. $2 . 10^{-5}$ Ws entspricht, erzeugt, emittiert die Materialprobe B zeitlich phasenverschoben IR-Lichtsignale - $\Delta f_3$. Das Minus-Vorzeichen soll die zu der auftreffenden Laserstrahlung $f_1$ entgegengesetzte Richtung symbolisieren. Diese IR-Lichtsignale werden zur lichtleitenden Optik 6 emittiert und von dieser durchgelassen, denn es handelt sich um eine im folgenden als Doppeloptik bezeichnete Optik, welche in Richtung auf die Materialprobe B die Laserstrahlung $f_1$ durchläßt und fokussiert und welche in der entgegengesetzten Richtung bevorzugt die emittierten IR-Lichtsignale durchläßt. Bevorzugt hat diese Doppeloptik 6 an ihrer Frontseite eine Beschichtung, welche als Fenster für einen Spektralbereich von 2 - 5 μm im Infrarotbereich wirkt, dagegen praktisch nicht das Laserlicht mit seiner Wellenlänge von 1,064 μm in der Strahlrichtung der IR-Lichtsignale transmittiert. Zum Beispiel besteht diese Doppeloptik 6 aus Zn-Selenid-Glas und/oder Ca-Fluorid und/oder Ba-Fluorid.

Die von der Doppeloptik 6 durchgelassene IR-Strahlung -$\Delta f_3$ wird zunächst auf die Scanner-Spiegelanordnung 5 und von dieser auf einen halbdurchlässigen Koppelspiegel 4a geworfen, dieser ist ausgeführt als dichroitischer Spiegel, der in Richtung des Laserstrahls $f_1$ reflektiert, aber in der dazu entgegengesetzten Richtung als ein bezüglich der IR-Lichtsignale durchlässiges Fenster wirkt. Doppeloptik 6 und Koppelspiegel 4a wirken als Auskoppelelement für die emittierten IR-Lichtsignale. Vom Koppelspiegel 4a werden die IR-Lichtsignale auf einen ihm optisch nachgeschalteten IR-Umlenkspiegel 4b geworfen, der die IR-Lichtsignale z.B. um 90° umlenkt und auf das IR-Objektiv 7 leitet. Durch entsprechende Auslegung der Doppeloptik 6 bzw. durch Ausbildung eines optischen Systems bestehend aus Optiken für sichtbares Licht und für IR-Licht, ist es auch möglich, die IR-Dektektion in einem über den örtlichen Abstand einstellbaren zeitlichen Abstand zur Laseranregung "nachlaufen" zu lassen, um so eine definierte Tiefenzone der Probe zu detektieren oder diese - wenn ihre Wanddicke nicht zu groß ist - so anzustrahlen, daß sie von ihrer Rückseite IR-Lichtsignale aussendet bzw. emittiert. Wie erwähnt, werden bevorzugt für die Doppeloptik 6 Gläser verwendet, die in ihren Eigenschaften so ausgelegt werden, daß sowohl für die Laserstrahlen $f_1$ als auch für die IR-Strahlung - $\Delta f_3$ die Wirkung einer Sammel-Linse erzielt wird. Durch die Veränderung der Apertur der Doppeloptik 6, z.B. durch Änderung des Aufbaus und der Anordnung der optischen Elemente, kann ein dem Meßzweck angepaßter Anteil der von der Materialprobe B emittierten IR-Lichtsignale vergrößert und auf den IR-Detektor gelenkt werden. Die Funktion der Doppeloptik 6 kann grundsätzlich durch holographisch/optische Elemente ersetzt werden.

Die IR-Lichtsignale gelangen über den Koppelspiegel 4a und den Umlenkspiegel 4b, welch letzterer die genannten Signale um z.B. 90° umlenkt, auf das IR-Objektiv 7, welches die IR-Lichtsignale auf die Empfangsflächen 8a des IR-Detektors 8 fokussiert. Das IR-Objektiv 7 besteht, z.B. aus Calcium-Fluorid, oder Ge oder Si. Der IR-Detektor, welcher die ankommenden IR-Lichtsignale in entsprechende elektrische Signale umformt, besteht z.B. aus einer Indium-Antimonid-Verbindung und hat eine Detektionsfläche von ca. 50 - 100 μm im Durchmesser. Sein Signal/Rausch-Verhältnis ist bei einer Arbeitstemperatur von ca. 100 K am günstigsten. Diese Temperatur wird näherungsweise durch Kühlung mit Stickstoff erreicht. Ein entsprechendes Detektor-Kühlaggregat ist bei 10 angedeutet; die entsprechende Kühlgaszu- und -abfuhrleitung ist mit 11 bezeichnet. Der IR-Detektor wird insbesondere mit einer Joule-Thomson-Kühlung (mittels $N_2$) gekühlt. Stattdessen kann z.B. auch ein Stirling-Kühler nach dem Prinzip des Stirling-Motors verwendet werden.

Die im IR-Detektor erzeugten elektrischen Signale gelangen über eine Signalleitung 12 zu einem innerhalb des Meßkopfes A angeordneten Vorverstärker 13 kleiner Baugröße, und vom Ausgang des Vorverstärkers 13 werden die vorverstärkten elektrischen, den IR-Lichtsignalen analogen Signale über die Signalleitung 14 einer elektronischen Verstärkerstufe, insbesondere einem Lock-in-Verstärker 15 zugeleitet, welch letzterer innerhalb einer transportablen elektronischen Schrankeinheit C untergebracht ist.

Bei Verwendung des diodengepumpten Festkörperlasers FL bzw. bei Verwendung einer für den vorgesehenen Zweck auch geeigneten Laserdiode kann die Modulation des Laserstrahls $f_1$ über die elektrische Schaltung des Lasers erreicht werden; ein separater Modulator oder Chopper ist dann nicht erforderlich.

Die innerhalb der elektronischen Schrankeinheit C untergebrachte Verstärkerstufe 15 ist z.B. ein digitaler Lock-in-Verstärker (DLI). Im Unterschied zur Thermographie (bei der die zeitlich weitgehend konstante Temperatur erfaßt wird) werden bei dem photothermischen Meßverfahren die Amplitude und Phase der Temperaturmodulation ermittelt. Die Phasenverschiebung ergibt sich aus der zeitlichen Verzögerung, mit der die maximale Temperatur an der Oberfläche gegenüber dem Zeitpunkt der Anregung gemessen wird. Die Phasenverschiebung wird mit dem Lock-in-Verstärker bestimmt. In elektrischer Wirkverbindung in beiden Signalrichtungen steht dieser Verstärker 15 mit einem Modul 16 "Gerätesteuerung", und dieses Steuermodul 16 ist wiederum elektrisch und elektronisch verschaltet mit einer integralen elektrischen Signalverarbeitungs- und Speichereinheit 17 mit Bildschirm oder Monitor 18. Die Einheit 17 ist insbesondere ein Personal-Computer (PC). Mit anderen Worten: Die transportable elektronische Schrankeinheit C umfaßt Mittel 15, 17 zur elektronischen Signalverarbeitung, Speicherung und Darstellung der von wenigstens einem IR-Lichtdetektor 8 gelieferten elektrischen Signale und zweite Mittel 16 zur Steuerung des Meßkopfes A. Dazu gehören: Wenigstens eine elektronische Verstärkerstufe 15 und eine dazugehörige elektronische Rechnereinheit 17, ferner das zwischen den Verstärkern 13, 15 und der elektronischen Rechnereinheit 17 eingeschaltete Steuermodul 16. Auf dem Bildschirm 18 werden die aus den IR-Lichtsignale gewonnenen, gesammelten und aufbereiteten Daten dargestellt. Das Steuermodul 16 erzeugt dabei die Steuersignale zur Einstellung der Laserstrahl-Charakteristika für den Laser FL, wie Puls-Pausen-Verhältnis und Strahlleistung, Anstrahl-Bahnmuster und Abtast-Bahnmuster sowie Scan-Geschwindigkeit.

Durch den Wegfall des separat aufzustellenden Gaslasers und den Verzicht auf Übertragung der Laserstrahlung über Lichtwellenleiter kann, wie bereits erwähnt, die Geräte-Mobilität hergestellt werden.

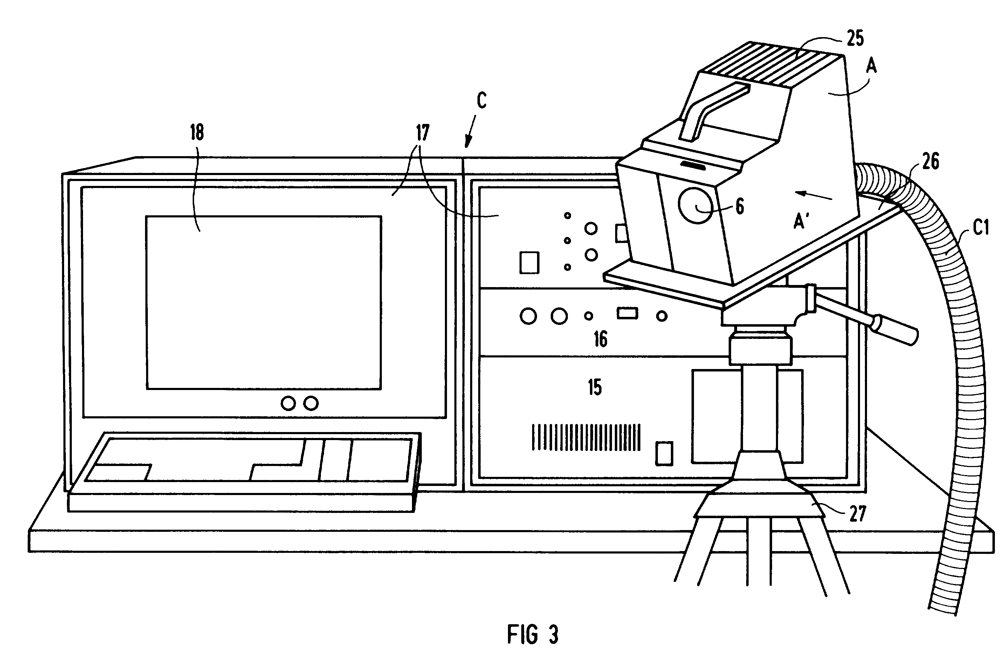

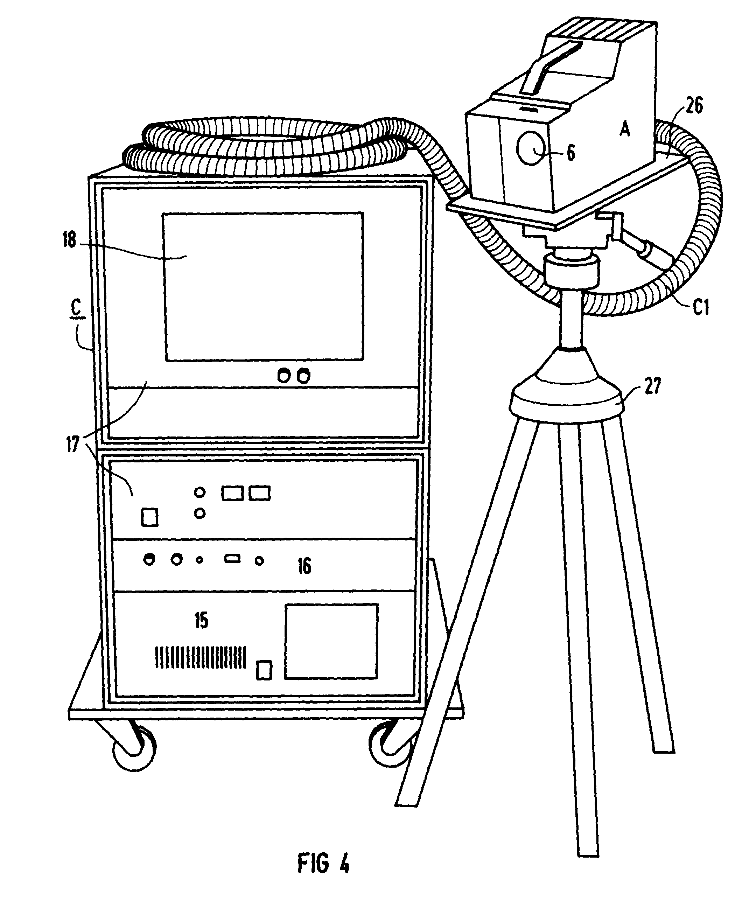

Die elektronische Schrankeinheit C und der integrale Meßkopf A werden lediglich durch ein hochflexibles elektrisches Kabel C1 (vgl. Figur 3 und 4) relativ großer Reichweite miteinander verbunden. Damit ist vor Ort auch die zentrale Aufstellung der elektronischen Schrankeinheit C möglich, wobei Meßstellen im weiten Umkreis erreicht werden können.

In Figur 1 sind mit 19 eine elektrische Signalleitung zwischen dem Verstärker 15 und dem Laser FL bezeichnet und mit 20 eine weitere elektrische Signalleitung zur Ansteuerung der Spiegel-Scanner-Anordnung 5 von entsprechenden Signalausgangs-Klemmen des Personal-Computers oder der Rechnereinheit 17 her. In Figur 1 ist ein Kabel zur Versorgung des Meßkopfes A mit elektrischer Energie nicht gesondert dargestellt. Ein solches Energieversorgungskabel ist aber in dem flexiblen Verbindungskabel C1 nach Figur 3 bzw. Figur 4 enthalten.

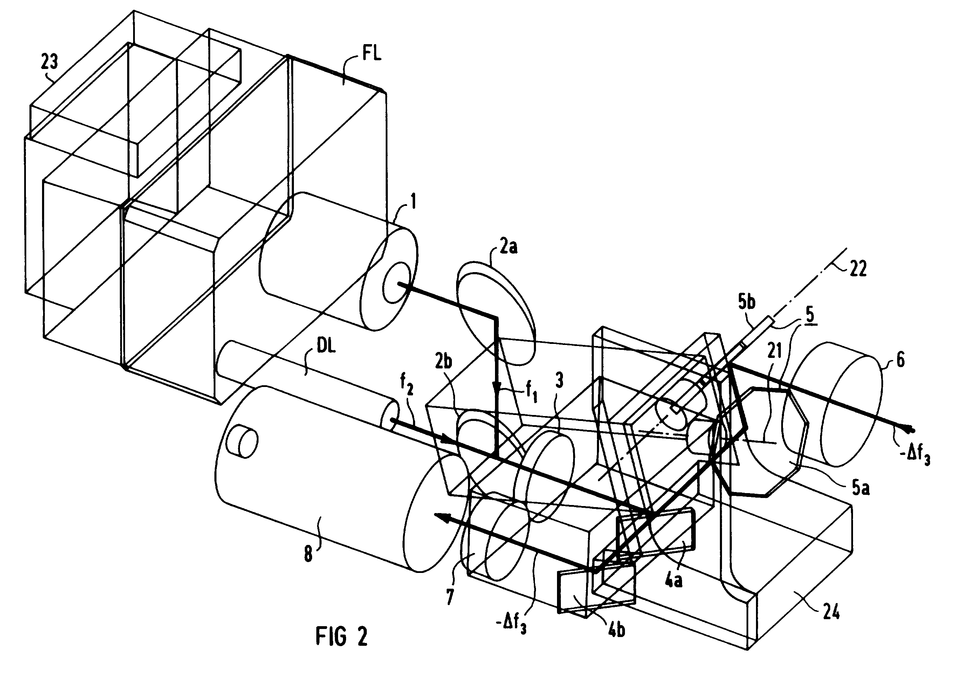

Bei dem im Vergleich zu Figur 1 detaillierteren Ausführungsbeispiel nach Figur 2 erkennt man zwei optisch hintereinander geschaltete Umlenkspiegel 2a, 2b und ein dem zweiten Umlenkspiegel 2b im Strahlengang nachgeschaltetes Aufweitobjektiv 3. Weiterhin ist deutlicher erkennbar die Spiegel-Scanner-Anordnung 5, welche aus zwei Scanner-Spiegeln 5a, 5b besteht, die optisch hintereinander geschaltet sind, wobei der Scanner-Spiegel 5a um die Drehachse 21 verstellbar gelagert ist und der Scanner-Spiegel 5b um die Drehachse 22 verdrehbar gelagert ist, so daß der Scanner-Spiegel 5a den auf ihn geworfenen Laserstrahl $f_1$ in Richtung $\pm$ x und der Scanner-Spiegel 5b den auf ihn geworfenen Laserstrahl in Richtung $\pm$ y verstellt (vgl. Figur 11). In Figur 2 ist weiterhin ein Gehäuse 23 für den Laser FL in seinen Umrissen angedeutet und ein mit diesem Gehäuse 23 baulich vereinigter Pilotlaser DL in Form eines Diodenlasers, von welchem ein Pilotstrahl $f_2$ seinen Ausgang nimmt, welcher über den zweiten Umlenkspiegel 2b in den Strahlengang des Laserstrahls $f_1$ eingekoppelt wird. Wie man sieht, laufen die Strahlen $f_1$ (Laserstrahl) und $f_2$ (Pilotstrahl) zunächst achsparallel zueinander. Durch die beiden hintereinander geschalteten ersten und zweiten Umlenkspiegel 2a, 2b wird der Laserstrahl $f_1$ zweimal um 90° umgelenkt, und nach der zweiten Umlenkung (nach dem zweiten Umlenkspiegel 2b) fallen beide Strahlen $f_1$ und $f_2$ aufeinander. Der zweite Umlenkspiegel 2b ist zur Einkopplung des Pilotstrahls $f_2$ als dichroitischer Spiegel ausgeführt, welcher mit seiner Reflektionsseite den Laserstrahl $f_1$ reflektiert, zugleich aber den von der anderen Seite ankommenden Pilotstrahl $f_2$ als durchlässiges Fenster durchläßt. Beide Strahlen $f_1$, $f_2$ passieren dann die Aufweitoptik 3 und gelangen auf den dielektrischen Spiegel 4a. In praxi wird der Pilotlaser DL nur eingeschaltet, wenn die Scan-Zone 9 (Figur 1) festgelegt werden soll. Der Pilotstrahl $f_2$ gelangt mithin (wenn der Laser FL noch nicht arbeitet und der Pilotlaser DL eingeschaltet ist) über den dielektrischen Koppelspiegel 4a und die Scanner-Spiegelanordnung 5 durch die Doppeloptik 6 auf die Materialprobe und erzeugt dabei einen z.B. roten Leuchtpunkt. Wenn die Scan-Zone festgelegt ist, sollte der Pilotlaser DL vorzugsweise weiterbetrieben werden, damit der eigentliche Meßvorgang verfolgt werden kann, wenn dieser nach Einschalten des Lasers FL beginnt. In Figur 2 sind in einer Art Phantomdarstellung noch einige pultartige Lagerelemente für die vorbeschriebenen Optiken angedeutet und generell mit 24 bezeichnet.

In Figur 2 sind der Laserstrahl $f_1$ und der Pilotstrahl $f_2$ sowie der Strahl der von der Materialprobe (in Figur 2 nicht ersichtlich) emittierten IR-Lichtsignale durch verstärkte Linien hervorgehoben. Zwischen dem Koppelspiegel 4a und der Doppeloptik 6 sind die Strahlwege aller drei Strahlentypen gemeinsam; vor dem Koppelspiegel 4a bis zum IR-Detektor 8 existiert nur IR-Strahlung. Für die nachstehende Tabelle sei angenommen, daß (+) die Strahlrichtung in Richtung auf die Materialprobe ist und (-) die Richtung der von der Materialprobe emittierten IR-Lichtsignale. Die nachfolgende Tabelle stellt eine übersichtliche Zusammenfassung der Eigenschaften der einzelnen Optiken sowie der optischen Verhältnisse für die drei Strahlentypen $f_1$, $f_2$ und - $\Delta f_3$ dar und gibt in der rechten Spalte außerdem die Transmissionsgrade der Optiken und die Reflexionsgrade der Spiegel für die Laserstrahlung $f_1$ an. Durch Multiplikation der Werte der rechten Spalte erhält man einen resultierenden kombinierten (ersten) Transmissions- und Reflexionsgrad für den Laserstrahl $f_1$ von 0,829 bzw. 82,9 %. Für den IR-Strahl - $\Delta f_3$ ergibt sich ein ähnlich günstiger resultierender (zweiter) Wert, weil die Transmissions- und Reflexionsgrade der Optiken 6, 7 und der Spiegel 5b, 5a, 4a, 4b für den IR-Strahl vergleichbar sind mit den Transmissions- und Reflexionsgraden der entsprechenden Optiken und Spiegel für den Laserstrahl $f_1$.

| Opt. Element | strahlendurchlässig in | | reflektiert in | | Transmissions- bzw. Reflex. grad f.$f_1$ |
|---|---|---|---|---|---|
| | Richtung (+) | Richtung (-) | Richtung (+) | (-) | |
| Aufweitoptik 1 | $f_1$ | | - | | 0,99 |
| Umlenkspiegel 2a | - | | $f_1$ | | 0,998 |
| Umlenkspiegel 2b | $f_2$ | | $f_1$ | | 0,998 |
| Aufweitoptik 3 | $f_1$, $f_2$ | | - | | 0,99 |
| dichroitischer Spiegel 4a ("beam splitter") | - | $-\Delta f_3$ | $f_1$, $f_2$ | | 0,96 |
| Scan-Spiegel 5a | - | - | $f_1$, $f_2$ | $-\Delta f_3$ | 0,96 |
| Scan-Spiegel 5b | - | - | $f_1$, $f_2$ | $-\Delta f_3$ | 0,96 |
| Doppeloptik 6 | $f_1$, $f_2$ | $-\Delta f_3$ | - | - | 0,96 |
| IR-Umlenkspiegel 4b | - | - | - | $-\Delta f_3$ | |
| IR-Objektiv 7 | - | $-\Delta f_3$ | - | - | |

$f_1$ = Frequenz des Lasers
$f_2$ = Frequuenz des Pilotlasers
$-\Delta f_3$ = IR-Strahlung

In Figur 3 und 4 sind gleiche Teile zu Figur 1 auch mit den gleichen Bezugszeichen versehen. In beiden Darstellungen ist der portable Meßkopf A mit Kühlschlitzen 25 zur Abführung der Verlustwärme versehen; er ist jeweils auf der Plattform 26 eines Stativs 27 angeordnet und über ein flexibles Kabel C1 mit der elektronischen Schrankeinheit C verbunden.

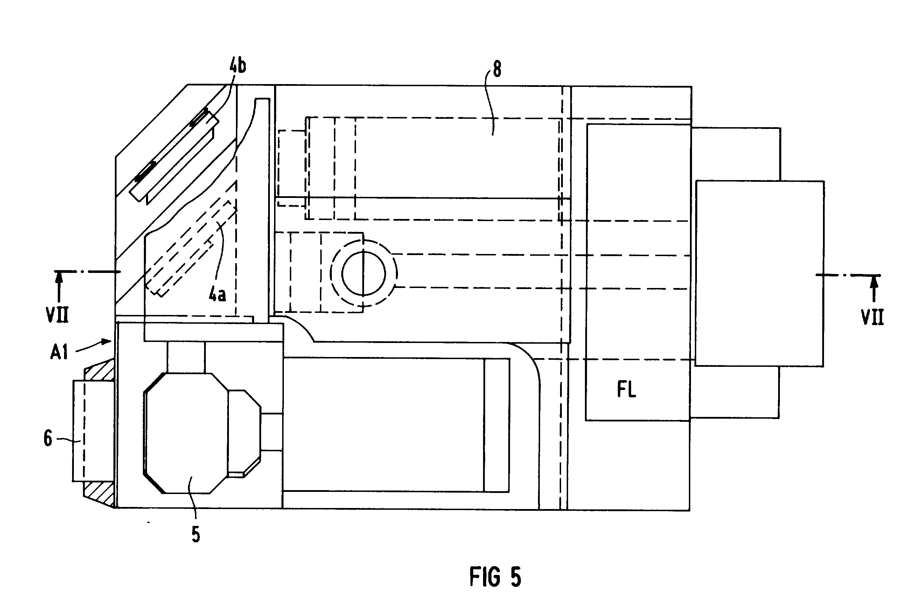

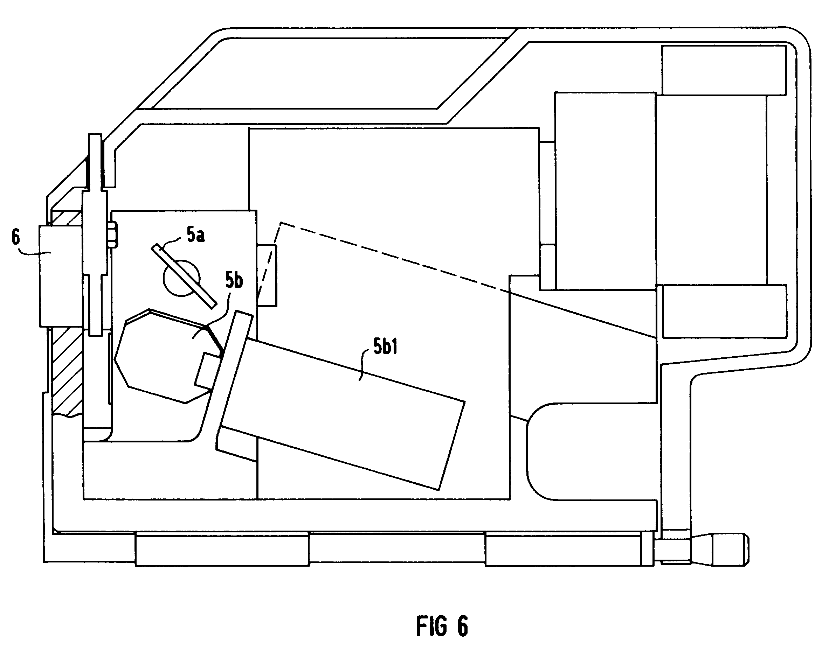

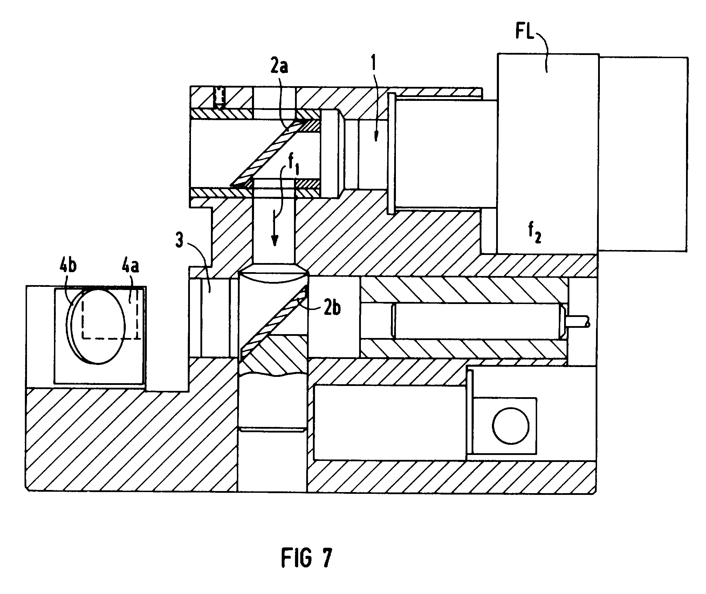

Aus den Figuren 5 bis 7 erkennt man weitere Einzelheiten, insbesondere konstruktiver Art, des Meßkopfes A. Figur 5 zeigt die Doppeloptik 6 an der Stirnseite AI des Meßkopfes A, den Koppelspiegel 4a und den IR-Umlenkspiegel 4b sowie die Scanner-Spiegelanordnung 5. In Figur 6 sind der Antrieb 5bI für den einen Scanner-Spiegel 5b und der andere Scanner-Spiegel 5a zu sehen, ebenso die Doppeloptik 6. Figur 7 zeigt in ihren Umrissen den Laser FL mit seiner Aufweitoptik 1, die beiden ihm nachgeschalteten Umlenkspiegel 2a, 2b, den Koppelspiegel 4a, den IR-Umlenkspiegel 4b (der in der Zeichnung kreisförmig ausgeführt ist) und die zweite Optik 3, welche Teil der Aufweitoptik ist.

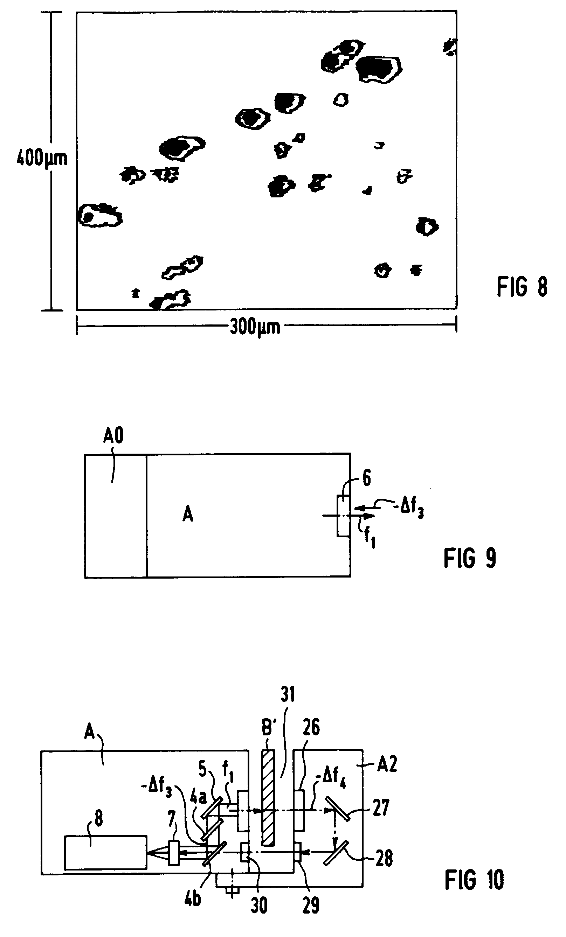

Figur 8 zeigt die Momentaufnahme einer Scan-Zone, vergrößert, und zwar handelt es sich um festgestellte Mikroporen in zeitstandsbeanspruchten Rohrleitungen.

Figur 9 zeigt, daß an den Meßkopf A eine Energieversorgungseinheit AO angebaut werden kann, so daß zum Meßkopf keine Stromversorgungskabel verlegt werden müssen. Diese Versorgungseinheit AO kann aufladbare Akkus enthalten.

Figur 10 zeigt, daß es durch ein gesondertes, an den eigentlichen Meßkopf anbaubares Aggregat A2 möglich ist, relativ dünnwandige Materialproben B' auf die von ihrer Rückseite abgestrahlte IR-Strahlung zu untersuchen, welche über die IR-Optik 26, die beiden Umlenkspiegel 27, 28 und eine weitere IR-Optik 29 über ein Eintrittsfenster 30 des Meßkopfes A auf den Umlenkspiegel 4b von dessen Rückseite her gelangt. Dieser Umlenkspiegel 4b ist für diesen Anwendungsfall ein dichroitischer Spiegel, wobei dann der weitere Strahlenverlauf zum IR-Objektiv 7 und zum IR-Detektor 8 so ist, wie anhand von Figur 2 erläutert.

Mit der Einrichtung nach Figur 10 wird ein Verfahren verwirklicht, bei dem die Materialprobe B' an einer Frontseite mit dem Laserstrahl $f_1$ entsprechend einem Anstrahl-Bahnmuster angestrahlt wird. Bei entsprechend geringer Materialwanddicke der Materialprobe B' (z. B. Bruchteilen von Millimetern) können nun die von der Rückseite der Materialprobe B' emittierten IR-Lichtsignale - $\Delta f_4$ entsprechend einem Abtast-Bahnmuster abgetastet werden. Dies kann z. B. so geschehen, daß die Umlenkspiegel 27, 28 als Scanner-Spiegel ausgeführt sind, welche entsprechend den Scanner-Spiegeln 5a, 5b nach Figur 2 synchron mit diesen in x- bzw. y-Richtung um kleine Beträge motorisch ausgelenkt werden. Wie man es aus Figur 10 außerdem erkennt, ist es günstig, wenn die von der Rückseite der dünnwandigen Materialprobe B' emittierten IR-Lichtsignale - $\Delta f_4$ so umgelenkt werden, daß sie mit dem letzten Teil des Strahlenganges für die von der laserzugewandten Materialprobenseite emittierten IR-Lichtsignale - $\Delta f_3$, der auf den IR-Detektor 8 ausgerichtet ist, zusammen fallen. Im vorliegenden Falle findet die Vereinigung am IR-Umlenkspiegel 4b statt. Durch in Figur 10 nicht näher dargestellte Lichtschranken kann erreicht werden, daß entweder nur die IR-Lichtsignale - $\Delta f_3$ oder aber - $\Delta f_4$ über den IR-Umlenkspiegel zum IR-Detektor 8 gelangen. Man kann also die Materialprobe B' nach beiden Verfahrensvarianten untersuchen: Man wertet entweder die IR-Lichtsignale - $\Delta f_3$ aus, die von der laserzugewandten Seite der Materialprobe B' emittiert werden, oder die IR-Lichtsignale - $\Delta f_4$, welche von der laserabgewandten Seite der Materialprobe B' emittiert werden. Zwischen Meßkopf A und Zusatzaggregat ist zum Einfügen der dünnwandigen Materialprobe B' ein Zwischenraum 31 vorgesehen. Das vom Zusatzaggregat A2 über die IR-Optik 26 empfangene IR-Lichtsignal - $\Delta f_4$ wird nach seiner Umlenkung um zweimal 90° durch eine erste gehäuseabdichtende lichtleitende Optik 29 vom Zusatzaggregat in den Zwischenraum 31 und von diesem über eine zweite gehäuseabdichtende Optik 30 in den internen Strahlengang der IR-Lichtsignale - $\Delta f_3$ des Meßkopfes A geleitet. Dies hat den Vorteil, daß man mit einem einzigen IR-Detektor 8 auskommt. In Sonderfällen kann aber dem Zusatzaggregat A2 ein eigener IR-Detektor zugeordnet werden, so daß eine Materialprobe B' praktisch gleichzeitig von beiden Seiten her untersucht werden kann. Das Zusatzaggregat A2 kann auch ein- und ausschwenkbar im Bezug auf die Achse des Laserstrahls $f_1$ ausgeführt werden, so daß der Meßkopf A wahlweise für Oberflächenuntersuchungen oder aber für Durchstrahlungsuntersuchungen dünnwandiger Materialproben geeignet ist.

Zurückkommend auf das bevorzugte Ausführungsbeispiel des "Wärmemikroskops" nach Figuren 1 bis 7, wird im folgenden noch einmal erläutert, weshalb das Weglassen von Lichtleiterfasern im Strahlengang des Laserstrahls $f_1$ innerhalb des portablen Meßkopfes und das bevorzugte Weglassen dieser Lichtleiterfasern im Strahlengang der von der Materialprobe emittierten IR-Lichtsignale - $\Delta f_3$ bis hin zum IR-Lichtdetektor 8 besonders vorteilhaft ist. Lichtleiterfasern für das Laserlicht müssen sogenannte Monomode-Fasern sein. Sie wirken etwa wie ein Hohlleiter, d.h.: die Strahlen gehen praktisch geradlinig durch den Kern. Die Kohärenzeigenschaften des Laserlichts werden nicht oder wenig beeinträchtigt. Erforderlich ist dafür ein Kerndurchmesser von einigen μm, also einige tausendstel Millimeter. Eine solche Faser wird benötigt, um eine beugungsbegrenzte Fokussierung und demzufolge eine hohe laterale Auflösung zu ermöglichen. Die Nachteile von Monomode-Fasern sind eine aufwendige Einkoppelmechanik und -optik zwischen Laser und Fasereintritt sowie die hohen Einkoppelverluste, die dennoch entstehen. Sie liegen, wie es im Labor unter optimalen Bedingungen gemessen wurde, bei 30 bis 40 %, im praktischen Einsatz dagegen bei 50 %. Verglichen damit sind die Dämpfungsverluste in der Faser relativ gering (30 dB/km bei 488 nm, 2 dB/km bei 1064 nm).

Bei dem Wärmemikroskop gemäß der vorliegenden Erfindung liegt eine kollineare Anordnung (Übereinstimmung von Laser- und IR-Pfad zwischen dichroitischem Spiegel 4a und Doppeloptik bzw. Scan-Objektiv 6) vor, welche mit Lichtleiterfaser-Technik nicht realisierbar ist, da eine IR-Lichtleiterfaser nicht gleichzeitig Monomode-Faser für die Laserwellenlänge sein kann. Man könnte allenfalls daran denken, zwischen dichroitischem Spiegel 4a und IR-Detektor 8 eine IR-Lichtleiterfaser zu installieren. Dadurch könnte der IR-Detektor außerhalb des portablen Meßkopfes plaziert werden. Nachteilig dabei wären jedoch die weiteren Übertragungsverluste und die geringe mechanische Belastbarkeit von IR-Fasern. Außerdem wäre eine Verbindungsleitung zwischen den elektronischen Bausteinen einschließlich IR-Detektor und dem portablen Meßkopf dann wohl kaum steckbar zu machen, sondern müßte fest installiert sein.

Zusammengefaßt läßt sich die bevorzugte Ausführungsform der Einrichtung nach der Erfindung, die man als "Wärmemikroskop" bezeichnen kann, durch die folgenden Merkmale charakterisieren:

a) das Wärmemikroskop weist einen Laser FL zur Aussendung eines modenreinen Laserstrahls $f_1$ auf, ferner
b) eine mechanische oder optische Scanneranordnung 5; 5a, 5b zur Ablenkung des Laserstrahl $f_1$.
c) Eine Optik 6 ist vorgesehen,

c1) zur Fokussierung des Laserstrahls $f_1$ auf einer Materialprobe B in einem Meßpunkt b2 mit einem Fokusdurchmesser, der kleiner/gleich 10μ beträgt und
c2) zur Zurückleitung der von der Materialprobe B emittierten Infrarot-Lichtsignale - $\Delta f_3$.

d) Ein Auskoppelelement 4a zur Auskopplung der Infrarot-Lichtsignale - $\Delta f_3$ ist ferner beim Wärmemikroskop vorgesehen ebenso wie
e) ein Infrarot-Detektor 8, der neben dem Laser FL angeordnet ist. Außerdem weist das Wärmemikroskop auf:
f) einen Umlenkspiegel 4b zur Umlenkung der vom Auskoppelelement 4a ausgekoppelten Infrarot-Lichtsignale - $\Delta f_3$ auf den Infrarot-Detektor 8,

g) ein Gehäuse, in dem der Laser FL, die Scanner-Anordnung 5; 5a, 5b, die Optik 6, das Auskoppelelement 4a, der Umlenkspiegel 4b und der Infrarot-Detektor 8 gemeinsam untergebracht sind, und schließlich

h) eine Signalauswerte-Einheit 13, 15, 17, 18 zur Auswertung und Darstellung der Signale des Infrarot-Detektors 8.

Wie es in den Verfahrensansprüchen 1 und 39 sowie im Begleittext zur Tabelle auf Seite 17 und aus der rechten Spalte dieser Tabelle hervorgeht, lassen sich mit dem Wärmemikroskop nach der Erfindung sehr gute resultierende Transmissions- und Reflexionsgrade von mindestens 60 % erreichen, und zwar sowohl für den Lichtweg des Laserstrahls $f_1$ als auch den Lichtweg der emittierten IR-Lichtsignale $-\Delta f_3$. Der erste resultierende Transmissions- und Reflexionsgrad für den Laserstrahl $f_1$ kann sogar bei guter Qualität der verwendeten Optiken und Beschichtungen in einem Bereich zwischen 60 und 85 % liegen und beträgt vorzugsweise mindestens 80 %. Die entsprechenden Werte für den IR-Strahl liegen etwas niedriger, sind aber durchaus vergleichbar mit den günstigen Transmissions- und Reflexionsgraden, die man für den Laserstrahl $f_1$ erzielen kann.

**Patentansprüche**

1. Verfahren zum Untersuchen der Eigenschaften von Materialien nach dem photothermischen Effekt, mit den folgenden Verfahrensmerkmalen:

a) Aussenden eines Laserstrahls (f1) in Richtung auf den zu untersuchenden Oberflächenbereich (9) der Materialprobe (B), wobei der Laserstrahl (f1) auf den gewünschten Meßpunktdurchmesser im Auftreff-Lichtfleck mittels einer laserstrahl-endseitigen lichtleitenden Optik (6) fokussiert wird, so daß dort ein Anteil der Lichtenergiemenge von den angestrahlten Volumenelementen der Materialprobe absorbiert wird und von der Oberfläche dieser und der dazu benachbarten Volumenelemente Infrarot-(IR-) Lichtsignale (- Δf3) emittiert werden;

b) simultane Erzeugung eine Anstrahl-Bahnmusters der Laserstrahlung (f1) und eines Astrahl-Bahnmusters der emittierten IR-Lichtsignale (-Δf3) durch eine innerhalb eines portablen Meßkopfs (A) angeordnete Scanneranordnung (5) mit mindestens einem um eine Achse drehbaren Spiegel, durch die die Laserstrahlung (f1) und die IR-Lichtsignale (-Δf3) geleitet werden;

c) Leitung der emittierten und durch die Scanneranordnung (5) geleiteten IR-Lichtsignale (-Δf3) hin zu einem optischen Auskoppelelement (6, 4a), durch welches die emittierten IR-Lichtsignale (-Δf3) weitergeleitet und an der Probenoberfläche reflektierte Anteile des Laserstrahls (f1) weitgehend unterdrückt werden;

d) Weiterleiten der ausgekoppelten IR-Lichtsignale (-Δf3) und Fokussieren auf die Empfangsflächen (8a) wenigstens eines IR-Lichtdetektors (8), welcher die empfangenen IR-Lichtsignale in entsprechende elektrische Signale zum Zweck der weiteren Signalaufbereitung umwandelt; und

e) Integration einer Laserlichtquelle (FL) in das Gehäuse des portablen Meßkopfes und Leitung des Laserstrahls (fl) von der Laserlichtquelle (FL) bis hin zu der laserstrahl-endseitigen lichtleitenden Optik (6) innerhalb des portablen Meßkopfes (A) mit einem ersten resultierenden Transmissions- und Reflexionsgrad von mindestens 60 % und Leitung der von der Materialprobe (B) emittierten IR-Lichtsignale (-Δf3) hin zu einem IR-Lichtdetektor (8) innerhalb des portablen Meßkopfes (A) mit einem zweiten resultierenden Transmissions- und Reflexionsgrad von mindestens 60 %.

2. Verfahren nach Anspruch 1, **dadurch gekennzeichnet**, daß als Laserlichtquelle (FL) ein diodengepumpter Festkörperlaser verwendet wird.

3. Verfahren nach Anspruch 1, **dadurch gekennzeichnet**, daß als Laserlichtquelle (FL) ein Diodenlaser verwendet wird.

4. Verfahren nach einem der Ansprüche 1 bis 3, **dadurch gekennzeichnet** daß die Materialprobe (B') an einer Frontseite mit dem Laserstrahl ($f_1$) entsprechend dem Anstrahl-Bahnmuster angestrahlt wird und daß die - bei entsprechend geringer Materialwanddicke - von der Rückseite der Materialprobe (B') emittierten IR-Lichtsignale (- Δ $f_4$) entsprechend dem Abtast-Bahnmuster abgetastet werden.

5. Verfahren nach einem der Ansprüche 1 bis 3, **dadurch gekennzeichnet**, daß die Materialprobe (B) auf derselben

Seite vom Laserstrahl ($f_1$) angestrahlt und hinsichtlich der von ihr emittierten IR-Lichtsignale (- $\Delta f_3$) abgetastet wird und daß die emittierten IR-Lichtsignale auf einem Teil ihres Weges längs desselben Strahlenpfades und durch wenigstens eine laserstrahl-endseitige lichtleitende Optik, wie sie zur Leitung der ankommenden Laserstrahlung ($f_1$) gemäß dem Anstrahl-Bahnmuster verwendet werden, zu dem optischen Auskoppelelement geleitet werden.

6. Verfahren nach einem der Ansprüche 1 bis 3 sowie 5, **dadurch gekennzeichnet**, daß das optische Auskoppelelement (4a,6) eine sogenannte Doppeloptik (6) umfaßt, welche in Richtung auf die Materialprobe (B) die Laserstrahlung ($f_1$) durchläßt und fokussiert und welche in der entgegengesetzten Richtung bevorzugt die emittierten IR-Lichtsignale (- $\Delta f_3$) durchläßt.

7. Verfahren nach einem der Ansprüche 1 bis 6, **dadurch gekennzeichnet** daß zur Erzeugung des Anstrahl-Bahnmusters der Laserstrahlung ($f_1$) diese über zwei optisch hintereinandergeschaltete Scanner-Spiegel (5a, 5b) geleitet wird, von denen der eine (5a) zur Strahlablenkung in X-Richtung um eine erste Achse (21) und der andere (5b) zur Strahlablenkung in Y-Richtung um eine zweite Achse (22) gedreht wird.

8. Verfahren nach einem der Ansprüche 1 bis 3 sowie 5 bis 7, **dadurch gekennzeichnet**, daß das optische Auskoppelelement (6, 4a) einen dichroitischen Koppelspiegel (4a) umfaßt und die Laserstrahlung ($f_1$) in zur Materialprobe (B) hin weisender Strahlrichtung von der wirksamen Spiegelfläche des Koppelspiegels (4a) in den auf die Scanner-Spiegel (5a, 5b) gerichteten Strahlenpfad reflektiert wird, wogegen die in der zum Laserstrahl ($f_1$) entgegengesetzten Richtung ankommenden IR-Lichtsignale (- $\Delta f_3$) von dem in dieser Strahlrichtung als Fenster wirkenden Koppelspiegel (4a) durchgelassen werden.

9. Verfahren nach einem der Ansprüche 1 bis 8, **dadurch gekennzeichnet**, daß der aus der Laserlichtquelle (FL) austretende Laserstrahl ($f_1$) eine erste, den Laserstrahl aufweitende Optik (1) passiert, welche Bestandteil einer Aufweitoptik (1, 3) ist, daran anschließend über zwei optisch hintereinandergeschaltete Umlenkspiegel (2a, 2b) zweimal um je 90° umgelenkt wird, so daß er auf die wirksame Fläche des Koppelspiegels (4a) ausgerichtet ist und von dort seinen Weg über die beiden Scanner-Spiegel (5a, 5b) zur laserstrahl-endseitigen lichtleitenden Optik (6) nimmt, von welcher er auf die Meßpunkte an der Materialprobe (B) fokussiert wird.

10. Verfahren nach Anspruch 9, **dadurch gekennzeichnet**, daß der Laserstrahl ($f_1$) von dem zweiten (2b) der Umlenkspiegel (2a, 2b) zu dem Koppelspiegel (4a) über eine zweite Optik (3), welche Bestandteil der Aufweitoptik (1, 3) ist, geführt wird.

11. Verfahren nach Anspruch 9 oder 10, **dadurch gekennzeichnet**, daß der Pilotstrahl ($f_2$) eines Pilotlasers (DL) in den Strahlenweg des Laserstrahls ($f_1$) eingekoppelt wird, so daß vor Beginn der Untersuchung bzw. der Anstrahlung der Materialprobe (B) mit dem Laserstrahl ($f_1$) ein sichtbarer Auftreff-Pilotlichtfleck an der Materialprobe zur Einjustierung der Scan-Zone (9) zur Verfügung steht.

12. Verfahren nach Anspruch 11, **gekennzeichnet** durch die Verwendung eines im sichtbaren Rot emittierenden Pilotlasers (DL), vorzugsweise eines Diodenlasers.

13. Verfahren nach Anspruch 11 oder 12, **dadurch gekennzeichnet**, daß der Pilotstrahl ($f_2$) in den Strahlenweg zwischen dem zweiten Umlenkspiegel (2b) und dem Koppelspiegel (4a) eingestrahlt wird und daß hierzu der zweite Umlenkspiegel (2b) den auf seiner Rückseite ankommenden Pilotstrahl ($f_2$) wie ein Fenster durchläßt, während er den auf seiner Vorderseite ankommenden Laserstrahl ($f_1$) auf den Koppelspiegel (4a) reflektiert.

14. Verfahren nach einem der Ansprüche 1 bis 13,
    **dadurch gekennzeichnet**, daß der Laserstrahl ($f_1$) zur Erzielung eines gewünschten Puls-Pausen-Verhältnisses moduliert wird.

15. Verfahren nach einem der Ansprüche 1 bis 14,
    **dadurch gekennzeichnet**, daß der Laserstrahl ($f_1$) über die Scan-Zone (9) längs eines orthogonalen Anstrahl-Bahnmusters geführt wird.

16. Verfahren nach einem der Ansprüche 1 bis 14,
    **dadurch gekennzeichnet**, daß der Laserstrahl ($f_1$) über die Scan-Zone (9) längs eines Anstrahl-Bahnmusters geführt wird, welches durch spiralige oder konzentrische Kreisbahnen gebildet wird.

**17.** Verfahren nach Anspruch 4,
**dadurch gekennzeichnet** , daß die von der Rückseite der dünnwandigen Materialprobe (B') emittierten IR-Lichtsignale (- $\Delta f_4$) so umgelenkt werden, daß sie mit dem letzten Teil des Strahlengangs für die von der laserzugewandten Materialprobenseite emittierten IR-Lichtsignale (- $\Delta f_3$), der auf den IR-Detektor (8) ausgerichtet ist, zusammenfallen.

**18.** Verwendung des Verfahrens nach einem der Ansprüche 1 bis 17 im Rahmen der zerstörungsfreien Werkstoffprüfung zur Detektion von Materialinhomogenitäten, Materialfehlern, Delaminationen sowie Korrosions- und Erosionserscheinungen, zum Beispiel zur

- Detektion von Zeitstandschädigungen in Form von Cavities in metallischen Werkstoffen,
- zur Kontrolle auf Fehler an

  -- Elektrobauteilen, wie Chips, Halbleitern, Solarzellen,
  -- Lötstellen,
  -- Erzeugnissen der Papierindustrie hinsichtlich Dicke, Faserverteilung, Haftung,
  -- Erzeugnissen der Kunststoffindustrie hinsichtlich Porösitäten, Faserverteilung und Orientierung und

- zur Prozeßkontrolle.

**19.** Verwendung des Verfahrens nach einem der Ansprüche 1 bis 17 zur Ermittlung von Materialstrukturen, Materialkenngrößen, wie zum Beispiel Dichte, Wärmeleitfähigkeit, spezifische Wärme, Härtegrad, und zur Ermittlung von Materialzuständen.

**20.** Verwendung des Verfahrens nach einem der Ansprüche 1 bis 17 zur Messung von Schichtdicken, Belegungen, Oberflächenqualitäten, zum Beispiel Rauhtiefen, und zur Messung der Haftung von Beschichtungen.

**21.** Verwendung des Verfahrens nach einem der Ansprüche 1 bis 17 zur Spurensuche, zum Beispiel auf Fingerabdrücke.

**22.** Verwendung des Verfahrens nach einem der Ansprüche 1 bis 17 zum Aufspüren und Aufdecken von Fälschungen, zum Beispiel bei Banknoten, Gemälden, Metall-Legierungen, Münzen, Keramiken und antiken Möbeln.

**23.** Einrichtung zur Durchführung des Verfahrens nach einem der Ansprüche 1 bis 16, mit einem portablen, ein kompaktes Gehäuse aufweisenden Meßkopf, wobei das Gehäuse eine Stirnwand aufweist, umfassend:

a) eine Laserlichtquelle, untergebracht im Gehäuse des portablen Meßkopfes, deren Laserstrahl ($f_1$) lichtleiterfrei über gehäuseinterne, strahlführende Mittel (1, 2a, 2b, 3, 4a, 5a, 5b) bis hin zu einer laserstrahl-endseitigen lichtleitenden Optik (6) geleitet wird;
b) die genannte laserstrahl-endseitige lichtleitende Optik (6), untergebracht an oder in der Stirnwand (A1) des Gehäuses und ausgebildet als sogenannte Doppeloptik, welche in Richtung auf die Materialprobe (B) die Laserstrahlung ($f_1$) durchläßt und fokussiert und welche in der entgegengesetzten Richtung bevorzugt die von der Materialprobe emittierten IR-Lichtsignale (- $\Delta f_3$ ) durchläßt, wobei die Optik (6) Bestandteil eines optischen Auskoppelelementes (6, 4a) ist,
c) wenigstens einen IR-Lichtdetektor, untergebracht im Gehäuse des Meßkopfes und mit seinen Empfangsflächen ausgerichtet auf den Fokuspunkt eines optisch vorgeschalteten Infrarot-Objektivs zur Umwandlung der IR-Lichtsignale in entsprechende elektrische Signale zum Zwecke der weiteren Signalaufbereitung, wobei die gehäuseinternen strahlführenden Mittel eine der laserstrahl-endseitigen Optik im Strahlenweg des Laserstrahls ($f_1$) vorgeschaltete Scanner-Spiegelanordnung (5) umfassen, welche zur Ablenkung des Laserstrahls ($f_1$) gemäß einem Anstrahl-Bahnmuster und zur Abtastung der von der Materialprobe (B) im Bereich ihrer Scan-Zone (9) emittierten IR-Lichtsignale (- $\Delta f_3$ ) nach einem Abtast-Bahnmuster eingerichtet ist; und wobei die Mittel zur Leitung des Laserstrahls ($f_1$) mit einem ersten resultierenden Transmissions- und Reflexionsgrad von mindestens 60 % und die Mittel zur Leitung der IR-Lichtsignale (- $\Delta f_3$ ) mit einem zweiten resultierenden Transmissions- und Reflexionsgrad von mindestens 60 % ausgestattet sind.

**24.** Einrichtung nach Anspruch 23,
**dadurch gekennzeichnet**, daß die gehäuseinternen strahlführenden Mitteln zusätzlich umfassen:

a1) einen der Scanner-Spiegelanordnung (5) im Strahlweg des Laserstrahls ($f_1$) vorgeschalteten Koppelspiegel (4a), ausgeführt als dichroitischer Spiegel, der in Richtung des Laserstrahls ($f_1$) reflektiert und in der dazu entgegengesetzten Richtung als ein bezüglich der IR-Lichtsignale durchlässiges Fenster wirkt;

a2) eine in einer Richtung entgegengesetzt zur Richtung des Laserstrahls ($f_1$), d.h. auf der der reflektierenden Fläche abgewandten Seite des Koppelspiegels (4a) diesem vorgeschaltetes Infrarot-Objektiv (7), welches die vom Koppelspiegel (4a) ankommenden IR-Lichtsignale auf die Empfangsflächen (8a) wenigstens eines IR-Lichtdetektors (8) fokussiert.

25. Einrichtung nach Anspruch 23 oder 24,
**gekennzeichnet durch** wenigstens eine transportable elektronische Schrankeinheit (C), umfassend erste Mittel (15, 17) zur elektrischen Signalverarbeitung der von dem wenigstens einen IR-Lichtdetektor (8) gelieferten elektrischen Signale und zweite Mittel zur Steuerung des Meßkopfes, wobei die ersten Mittel umfassen: wenigstens eine elektronische Verstärkerstufe (15) und eine elektronische Rechnereinheit (17) und wobei die zweiten Mittel umfassen: ein zwischen Verstärkerstufe (15) und elektronischer Rechnereinheit (17) eingeschaltetes Steuermodul (16), wobei die elektronische Rechnereinheit (17) wenigstens einen Bildschirm (18) aufweist, auf welchen die aus den IR-Lichtsignalen gewonnenen, gesammelten und aufbereiteten Daten darstellbar sind, und wobei das Steuermodul (16) Steuersignale zur Einstellung der Laserstrahl-Charakteristika der Laserlichtquelle (FL), wie Puls-Pausen-Verhältnis und Strahlleistung, Anstrahl-Bahnmuster und Abtast-Bahnmuster sowie Scan-Geschwindigkeit, erzeugt;

wenigstens ein flexibles elektrisches Verbindungskabel zum Signaltransport zwischen dem Meßkopf (A) und der elektronischen Schrankeinheit (C) und
Mittel zur Versorgung des portablen Meßkopfes (A) mit elektrischer Energie von einer Energieversorgungsquelle.

26. Einrichtung nach Anspruch 25,
**dadurch gekennzeichnet**, daß im portablen Meßkopf (A) ein dem IR-Lichtdetektor elektrisch nachgeschalteter Vorverstärker untergebracht ist, dessen Ausgangssignalleitung (14) zur Verstärkerstufe (15) der elektronischen Schrankeinheit (C) geführt ist.

27. Einrichtung nach Anspruch 25 oder 26,
**dadurch gekennzeichnet**, daß die Verstärkerstufe (15) ein Lock-in-Verstärker ist.

28. Einrichtung nach einem der Ansprüche 23 bis 27,
**dadurch gekennzeichnet**, daß innerhalb des portablen Meßkopfes (A) ein Pilotlaser (DL) untergebracht ist, dessen Pilotstrahl ($f_2$) in den Strahlenweg des Laserstrahls ($f_1$) einkoppelbar ist und welcher zur Einjustierung der Scan-Zone (9) dient.

29. Einrichtung nach Anspruch 28,
**dadurch gekennzeichnet**, daß der Pilotlaser (DL) im sichtbaren Rot abstrahlt.

30. Einrichtung nach Anspruch 28 oder 29,
**dadurch gekennzeichnet**, daß der Pilotstrahl ($f_2$) des Pilotlasers (DL) auf den zwischen einem zweiten Umlenkspiegel (2b) und dem Koppelspiegel (4a) befindlichen Strahlenweg für den Laserstrahl ($f_1$) der Laserlichtquelle (FL) ausgerichtet ist, wobei der zweite Umlenkspiegel (2b) ein Durchlaßfenster für den auf seiner Rückseite ankommenden Pilotstrahl ($f_2$) bildet und diesen auf den Koppelspiegel (4a) wirft.

31. Einrichtung nach einem der Ansprüche 23 bis 30,
**dadurch gekennzeichnet**, daß zur Einhaltung eines Tieftemperatur-Arbeitsbereichs für den IR-Lichtdetektor ein Kühlaggregat (10) vorgesehen ist.

32. Einrichtung nach einem der Ansprüche 28 bis 30,
**dadurch gekennzeichnet**, daß im Strahlengang des Lasers ($f_1$) auf eine erste Optik (1), welche Bestandteil einer Aufweitoptik ist, am Ausgang der Laserlichtquelle (FL) zwei optisch hintereinandergeschaltete erste und zweite Umlenkspiegel (2a, 2b) aufeinander folgen, welche den Laserstrahl ($f_1$) in eine versetzte, auf den Koppelspiegel (4a) ausgerichtete Bahn lenken, wobei der Pilotlaser (DL) mit seinem Pilotstrahl ($f_2$) in diese versetzte Bahn einstrahlend ausgerichtet ist.

EP 0 394 932 B1

**33.** Einrichtung nach Anspruch 32,
**dadurch gekennzeichnet**, daß zwischen dem zweiten Umlenkspiegel (2b) und dem Koppelspiegel (4a) eine zweite Optik (3), welche Bestandteil der Aufweitoptik (1, 3) ist, in den Strahlengang eingefügt ist.

**34.** Einrichtung nach einem der Ansprüche 23 bis 33,
**dadurch gekennzeichnet**, daß im Strahlengang des IR-Lichtsignals ($- \Delta f_3$) dem Koppelspiegel (4a) ein IR-Umlenkspiegel (4b) nachgeschaltet ist, welcher die vom Koppelspiegel (4a) durchgelassenen IR-Lichtsignale empfängt und in Richtung auf den IR-Lichtdetektor (8) bzw. auf ein diesem vorgeschaltetes Infrarot-Objektiv (7) wirft.

**35.** Einrichtung nach einem der Ansprüche 23 bis 34,
**gekennzeichnet durch** ein Zusatzaggregat (A2) für den Meßkopf (A) zur photothermischen Ausmessung relativ dünnwandiger Materialproben (B') durch Empfang der von der Rückseite der Materialprobe (B') ausgesandten IR-Lichtsignale ($-\Delta f_4$), umfassend eine Infrarot-Optik (26) zum Empfang der IR-Lichtsignale, eine Umlenkspiegel-Anordnung (27, 28) zum Umlenken der IR-Lichtsignale in eine Strahlachse, welche in Flucht mit der Empfangsfläche (8a) des IR-Detektors (8) liegt.

**36.** Einrichtung nach Anspruch 35,
**dadurch gekennzeichnet**, daß der dem infrarot-Objektiv (7) vorgeschaltete IR-Umlenkspiegel (4b) im Bezug auf die IR-Lichtsignale ($-\Delta f_3$), die von der laserzugewandten Materialprobenseite emittiert werden, reflektierend ist und im Bezug auf die IR-Lichtsignale ($- \Delta f_4$), die von der laser-abgewandten Materialprobenseite emittiert werden, durchlässig ist.

**37.** Einrichtung nach Anspruch 35 oder 36,
**dadurch gekennzeichnet**, daß zwischen Meßkopf (A) und Zusatzaggregat (A2) ein Zwischenraum zum Einfügen der dünnwandigen Materialprobe (B') vorgesehen ist und daß das vom Zusatzaggregat (A2) empfangene IR-Lichtsignal ($- \Delta f_4$) durch eine erste gehäuseabdichtende lichtleitende Optik (29) vom Zusatzaggregat (A2) in den Zwischenraum und von diesem über eine zweite gehäuseabdichtende lichtleitende Optik (30) in den internen Strahlengang der IR-Lichtsignale ($- \Delta f_3$) des Meßkopfes (A) leitbar ist.

**38.** Wärmemikroskop

a) mit einem Laser (FL) zur Aussendung eines modenreinen Laserstrahls ($f_1$),
b) mit einer Optik (6)

b1) zur Fokussierung des Laserstrahls ($f_1$) auf einer Materialprobe (B) in einem Meßpunkt (b2) mit einem Fokusdurchmesser, der kleiner/gleich 10 µ beträgt, und
b2) zur Zurückleitung der von der Materialprobe (B) emittierten Infrarot-Lichtsignale ($-\Delta f_3$),

c) mit einer Scanneranordnung (5; 5a, 5b) mit mindestens einem um eine Achse drehbaren Spiegel zur Ablenkung des Laserstrahls ($f_1$) und des emittierten IR-Lichtsignals ($-\Delta f_3$),
d) mit einem Auskoppelelement (4a) zur Auskopplung der Infrarot-Lichtsignale ($- \Delta f_3$),
e) mit einem Infrarot-Detektor (8), der neben dem Laser (FL) angeordnet ist,
f) mit einem Umlenkspiegel (4b) zur Umlenkung der vom Auskoppelelement (4a) ausgekoppelten Infrarot-Lichtsignale ($-\Delta f_3$) auf den Infrarot-Detektor (8),
g) mit einem Gehäuse, in dem der Laser (FL), die Scanneranordnung (5; 5a, 5b), die Optik (6), das Auskoppelelement (4a), der Umlenkspiegel (4b) und der Infrarot-Detektor (8) gemeinsam untergebracht sind, und
h) mit einer Signalauswerte-Einheit (13, 15, 17, 18) zur Auswertung und Darstellung der Signale des Infrarot-Detektors (8).

**39.** Verfahren nach Anspruch 1, **dadurch gekennzeichnet**, daß der erste resultierende Transmissions- und Reflexionsgrad für den Laserstrahl ($f_1$) im Bereich zwischen 60 % und 85 % liegt und vorzugsweise mindestens 80 % beträgt.

**Claims**

**1.** Method for testing the properties of materials according to the photothermal effect, having the following method features:

13

a) emission of a laser beam ($f_1$) in the direction of the surface region (9) to be tested of the material sample (B), with the laser beam ($f_1$) being focused to the desired measuring point diameter in the target light spot by means of a photoconductive optical element (6) on the laser-beam-end side, so that there a portion of the amount of light energy is absorbed by the irradiated volume elements of the material sample, and infrared (IR) light signals ($-\Delta f_3$) are emitted by the surface of the latter and the volume elements adjacent thereto;

b) simultaneous generation of an irradiation path pattern of the laser radiation ($f_1$) and of a radiation path pattern of the emitted IR light signals ($-\Delta f_3$) by a scanner arrangement (5), which is arranged inside a portable measuring head (A) and has at least one mirror, which is rotatable about an axis and through which the laser radiation ($f_1$) and the IR light signals ($-\Delta f_3$) are conducted;

c) conduction of the IR light signals ($-\Delta f_3$), which have been emitted and conducted through the scanner arrangement (5), to an optical decoupling element (6, 4a), by which the emitted IR light signals ($-\Delta f_3$) are conducted further and portions of the laser beam ($f_1$) that are reflected on the surface of the sample are substantially suppressed;

d) further conduction of the decoupled IR light signals ($-\Delta f_3$) and focusing thereof onto the receiving surfaces (8a) of at least one IR light detector (8), which converts the received IR light signals into corresponding electrical signals for the purpose of the further signal conditioning; and

e) integration of a laser light source (FL) into the housing of the portable measuring head and conduction of the laser beam ($f_1$) from the laser light source (FL) up to the photoconductive optical element (6), on the laser-beam-end side, inside the portable measuring head (A) with a first resulting transmittance and reflectance of at least 60%, and conduction of the IR light signals ($-\Delta f_3$), which are emitted by the material sample (B), to an IR light detector (8) inside the portable measuring head (A) with a second resulting transmittance and reflectance of at least 60%.

2. Method according to claim 1, characterised in that a diode-pumped solid-state laser is used as a laser light source (FL).

3. Method according to claim 1, characterised in that a diode laser is used as a laser light source (FL).

4. Method according to one of the claims 1 to 3, characterised in that a face of the material sample (B') is irradiated with the laser beam ($f_1$) according to the irradiation path pattern, and in that the IR light signals ($-\Delta f_4$) which - in the case of a correspondingly small material wall thickness - are emitted by the rear side of the material sample (B') are scanned according to the scanning path pattern.

5. Method according to one of the claims 1 to 3, characterised in that the material sample (B) is irradiated on the same side by the laser beam ($f_1$) and scanned with regard to the IR light signals ($-\Delta f_3$) emitted by it, and in that the emitted IR light signals, on part of their way, are conducted along the same beam path and through at least one photoconductive optical element on the laser-beam-end side, as used for conducting the incoming laser radiation ($f_1$) in accordance with the irradiation path pattern, to the optical decoupling element.

6. Method according to one of the claims 1 to 3 and 5, characterised in that the optical decoupling element (4a, 6) comprises a so-called doublet (6) which lets through and focuses the laser radiation ($f_1$) in the direction of the material sample (B), and in the opposite direction preferentially lets through the emitted IR light signals ($-\Delta f_3$).

7. Method according to one of the claims 1 to 6, characterised in that in order to generate the irradiation path pattern of the laser radiation ($f_1$), the latter is conducted via two scanner mirrors (5a, 5b) which are optically connected in series, one (5a) of which mirrors is rotated about a first axis (21) for beam deflection in the X direction, and the other (5b) is rotated about a second axis (22) for beam deflection in the Y direction.

8. Method according to one of the claims 1 to 3 and 5 to 7, characterised in that the optical decoupling element (6, 4a) comprises a dichroic coupling mirror (4a), and the laser radiation ($f_1$) in a beam direction pointing towards the material sample (B) is reflected by the active mirror surface of the coupling mirror (4a) into the beam path which is aligned with the scanner mirrors (5a, 5b), while on the other hand, the IR light signals ($-\Delta f_3$) arriving in the opposite direction to the laser beam ($f_1$) are let through by the coupling mirror (4a), which acts as a window in this direction.

9. Method according to one of the claims 1 to 8, characterised in that the laser beam ($f_1$) exiting from the laser light source (FL) passes through a first optical element (1), which expands the laser beam and is part of an expanding optical element (1, 3), and is subsequently deflected twice, by 90° in each case, by way of two deflecting mirrors (2a, 2b), which are optically connected in series, so that it is aligned with the active surface of the coupling mirror (4a), and from there makes its way via the two scanner mirrors (5a, 5b) to the photoconductive optical element (6) on the laser-beam-end side, by which it is focused onto the measuring points on the material sample (B).

10. Method according to claim 9, characterised in that the laser beam ($f_1$) is guided from the second (2b) of the deflecting mirrors (2a, 2b) to the coupling mirror (4a) by way of a second optical element (3), which is part of the expanding optical element (1, 3).

11. Method according to claim 9 or 10, characterised in that the pilot beam ($f_2$) of a pilot laser (DL) is coupled into the beam path of the laser beam ($f_1$), so that before the start of the testing or irradiation of the material sample (B) with the laser beam ($f_1$), there is a visible target pilot light spot on the material sample for the adjustment of the scanning zone (9).

12. Method according to claim 11, characterised by the use of a pilot laser (DL), preferably a diode laser, which emits in the visible red range.

13. Method according to claim 11 or 12, characterised in that the pilot beam ($f_2$) is irradiated into the beam path between the second deflecting mirror (2b) and the coupling mirror (4a), and in that for this purpose, the second deflecting mirror (2b) lets through, in the manner of a window, the pilot beam ($f_2$) arriving on its rear side, while it reflects onto the coupling mirror (4a) the laser beam ($f_1$) arriving on its front side.

14. Method according to one of the claims 1 to 13, characterised in that the laser beam ($f_1$) is modulated in order to achieve a desired mark-to-space ratio.

15. Method according to one of the claims 1 to 14, characterised in that the laser beam ($f_1$) is guided over the scanning zone (9) along an orthogonal irradiation path pattern.

16. Method according to one of the claims 1 to 14, characterised in that the laser beam ($f_1$) is guided over the scanning zone (9) along an irradiation path pattern which is formed by spiral or concentric circular paths.

17. Method according to claim 4, characterised in that the IR light signals ($-\Delta f_4$) emitted by the rear side of the thin-walled material sample (B') are deflected in such a way that they coincide with the last portion of the beam path for the IR light signals ($-\Delta f_3$) emitted by the side of the material sample that faces the laser, which beam path is aligned with the IR detector (8).

18. Use of the method according to one of the claims 1 to 17 within the scope of non-destructive material testing for detecting material non-homogeneities, flaws in the material, delaminations as well as corrosion marks and erosion marks, for example for:

- detecting creep damages in the form of cavities in metallic materials
- checking for flaws in

-- electrical components such as chips, semiconductors, solar cells
-- soldered joints
-- products of the paper industry with regard to thickness, fibre distribution, adhesion,
-- products of the plastics industry with regard to porosities, fibre distribution and orientation, and

- for process control.

19. Use of the method according to one of the claims 1 to 17 for establishing material structures, material characteristics such as density, thermal conductivity, specific heat, degree of hardness, for example, and for establishing material conditions.

20. Use of the method according to one of the claims 1 to 17 for measuring layer thicknesses, coatings, surface qualities, for example peak-to-valley heights, and for measuring the adhesion of coatings.

21. Use of the method according to one of the claims 1 to 17 for searching for traces, for example for fingerprints.

22. Use of the method according to one of the claims 1 to 17 for tracing and uncovering forgeries, for example in bank notes, paintings, metal alloys, coins, ceramics and antique furniture.

23. Device for carrying out the method according to one of the claims 1 to 16, having a portable measuring head which has a compact housing, with the housing having an end wall, comprising:

a) a laser light source, accommodated in the housing of the portable measuring head, the laser beam ($f_1$) of which laser light source is conducted without optical fibres by way of beam-guiding means (1, 2a, 2b, 3, 4a, 5a, 5b), which are inside the housing, up to a photoconductive optical element (6) on the laser-beam-end side;

b) the above-mentioned photoconductive optical element (6) on the laser-beam-end side, accommodated on or in the end wall (A1) of the housing and constructed as a so-called doublet, which lets through and focuses the laser radiation ($f_1$) in the direction of the material sample (B), and in the opposite direction preferentially lets through the IR light signals ($-\Delta f_3$) emitted by the material sample, with the optical element (6) being part of an optical decoupling element (6, 4a);

c) at least one IR light detector, accommodated in the housing of the measuring head and having its receiving surfaces aligned with the focus point of an infrared objective connected optically upstream for converting the IR light signals into corresponding electrical signals for the purpose of further signal conditioning, with the beam-guiding means inside the housing comprising a scanner mirror arrangement (5), which is connected upstream of the optical element, which is on the laser-beam-end side, in the beam path of the laser beam ($f_1$) and is arranged for deflecting the laser beam ($f_1$) in accordance with an irradiation path pattern and for scanning the IR light signals ($-\Delta f_3$), which are emitted by the material sample (B) in the region of its scanning zone (9), according to a scanning path pattern; and with the means for conducting the laser beam ($f_1$) being provided with a first resulting transmittance and reflectance of at least 60% and the means for conducting the IR light signals ($-\Delta f_3$) being provided with a second resulting transmittance and reflectance of at least 60%.

24. Device according to claim 23, characterised in that the beam-guiding means inside the housing additionally comprise:

a1) a coupling mirror (4a), constructed as a dichroic mirror, which is connected upstream of the scanner mirror arrangement (5) in the beam path of the laser beam ($f_1$) and reflects in the direction of the laser beam ($f_1$) and in the direction opposite thereto acts as a window which is transparent with regard to the IR light signals;

a2) an infrared objective (7) which, in a direction opposite to the direction of the laser beam ($f_1$), i.e. on the side of the coupling mirror (4a) that faces away from the reflecting surface, is connected upstream of said coupling mirror and focuses the IR light signals arriving from the coupling mirror (4a) onto the receiving surfaces (8a) of at least one IR light detector (8).

25. Device according to claim 23 or 24, characterised by at least one transportable electronic cabinet unit (C), comprising first means (15, 17) for electrical signal processing of the electrical signals delivered by the at least one IR light detector (8) and second means for controlling the measuring head, with the first means comprising: at least one electronic amplifier stage (15) and one electronic computer unit (17), and with the second means comprising: a control module (16) connected between amplifier stage (15) and electronic computer unit (17), with the electronic computer unit (17) having at least one screen (18) on which can be displayed the data which has been obtained from the IR light signals, collected and conditioned, and with the control module (16) generating control signals for adjusting the laser-beam characteristics of the laser light source (FL), such as mark-to-space ratio and radiant power, irradiation path pattern and scanning path pattern as well as scanning rate; at least one flexible, electrical interconnecting cable for signal transport between the measuring head (A) and the electronic cabinet unit (C), and means for supplying the portable measuring head (A) with electrical energy from an energy supply source.

26. Device according to claim 25, characterised in that accommodated in the portable measuring head (A) is a pre-amplifier which is electrically connected downstream of the IR light detector and the output signal line (14) of which is led to the amplifier stage (15) of the electronic cabinet unit (C).

27. Device according to claim 25 or 26, characterised in that the amplifier stage (15) is a lock-in amplifier.

28. Device according to one of the claims 23 to 27, characterised in that accommodated inside the portable measuring head (A) is a pilot laser (DL), the pilot beam ($f_2$) of which can be coupled into the beam path of the laser beam ($f_1$), and which is used for adjustment of the scanning zone (9).

29. Device according to claim 28, characterised in that the pilot laser (DL) radiates in the visible red range.

**30.** Device according to claim 28 or 29, characterised in that the pilot beam ($f_2$) of the pilot laser (DL) is aligned with the beam path for the laser beam ($f_1$) of the laser light source (FL) that is situated between a second deflecting mirror (2b) and the coupling mirror (4a), with the second deflecting mirror (2b) forming a transmission window for the pilot beam ($f_2$), which arrives on its rear side, and casting the latter onto the coupling mirror (4a).

**31.** Device according to one of the claims 23 to 30, characterised in that a cooling unit (10) is provided in order to maintain a low-temperature working range for the IR light detector.

**32.** Device according to one of the claims 28 to 30, characterised in that in the beam path of the laser ($f_1$) onto a first optical element (1), which is part of an expanding optical element, there are arranged one behind the other at the output of the laser light source (FL) two first and second deflecting mirrors (2a, 2b), which are optically connected in series and direct the laser beam ($f_1$) into an offset path which is aligned with the coupling mirror (4a), with the pilot beam ($f_2$) of the pilot laser (DL) being aligned so as to radiate into this offset path.

**33.** Device according to claim 32, characterised in that between the second deflecting mirror (2b) and the coupling mirror (4a), a second optical element (3), which is part of the expanding optical element system (1, 3), is inserted into the beam path.

**34.** Device according to one of the claims 23 to 33, characterised in that in the beam path of the IR light signal ($-\Delta f_3$), there is connected downstream of the coupling mirror (4a) an IR deflecting mirror (4b), which receives the IR light signals let through by the coupling mirror (4a) and casts them in the direction of the IR light detector (8) or onto an infrared objective (7) connected upstream thereof.

**35.** Device according to one of the claims 23 to 34, characterised by a supplementary unit (A2) for the measuring head (A) for photothermal measuring of relatively thin-walled material samples (B') by receiving the IR light signals ($-\Delta f_4$) emitted by the rear side of the material sample (B'), comprising an infrared optical element (26) for receiving the IR light signals, a deflecting mirror arrangement (27, 28) for deflecting the IR light signals into a beam axis which is in alignment with the receiving surface (8a) of the IR light detector (8).

**36.** Device according to claim 35, characterised in that the IR deflecting mirror (4b) arranged upstream of the infrared objective (7) is reflective with regard to the IR light signals ($-\Delta f_3$) emitted by the side of the material sample that faces the laser and transparent with regard to the IR light signals ($-\Delta f_4$) emitted by the side of the material sample that faces away from the laser.

**37.** Device according to claim 35 or 36, characterised in that there is provided between measuring head (A) and supplementary unit (A2) a gap for inserting the thin-walled material sample (B'), and in that the IR light signal ($-\Delta f_4$) received by the supplementary unit (A2) can be conducted through a first photoconductive optical element (29), which seals off the housing, from the supplementary unit (A2) into the gap, and from here via a second photoconductive optical element (30), which seals off the housing, into the internal beam path of the IR light signals ($-\Delta f_3$) of the measuring head (A).

**38.** Heat microscope

　　a) having a laser (FL) for emitting a pure-mode laser beam ($f_1$),
　　b) having an optical element (6)

　　　　b1) for focusing the laser beam ($f_1$) onto a material sample (B) at a measuring point (b2) having a focus diameter which is less than or equal to 10 $\mu$, and
　　　　b2) for returning the infrared light signals ($-\Delta f_3$) emitted by the material sample (B),

　　c) having a scanner arrangement (5; 5a, 5b) having at least one mirror which is rotatable about an axis, for deflecting the laser beam ($f_1$) and the emitted IR light signal ($-\Delta f_3$),
　　d) having a decoupling element (4a) for decoupling the infrared light signals ($-\Delta f_3$),
　　e) having an infrared detector (8), which is arranged next to the laser (FL),
　　f) having a deflecting mirror (4b) for deflecting onto the infrared detector (8) the infrared light signals ($-\Delta f_3$) which have been decoupled by the decoupling element (4a),
　　g) having a housing in which the laser (FL), the scanner arrangement (5; 5a, 5b), the optical element (6), the decoupling element (4a), the deflecting mirror (4b) and the infrared detector (8) are jointly accommodated, and

h) having a signal evaluating unit (13, 15, 17, 18) for evaluating and displaying the signals of the infrared detector (8).

**39.** Method according to claim 1, characterised in that the first resulting transmittance and reflectance for the laser beam ($f_1$) lies in the range between 60% and 85%, and preferably amounts to at least 80%.

**Revendications**

**1.** Procédé de contrôle des propriétés de matériaux par effet photothermique, présentant les caractéristiques suivantes :

a) émission d'un rayonnement laser ($f_1$) en direction de la zone (9) de surface à contrôler de l'échantillon (B) de matériau, le rayonnement laser ($f_1$) étant focalisé au diamètre souhaité du point de mesure dans le point lumineux incident au moyen d'une optique (6) de guidage terminale de rayonnement laser de sorte qu'une partie de la quantité d'énergie lumineuse y est absorbée par les éléments de volume de l'échantillon de matériau exposés au rayonnement et que des signaux lumineux infrarouges (IR) ($-\Delta f_3$) sont émis par la surface desdits éléments et des éléments de volume voisins ;
b) génération simultanée d'un dessin de trajectoire d'émission du rayonnement laser ($f_1$) et d'un dessin de trajectoire de balayage des signaux lumineux infrarouges ($-\Delta f_3$) émis par un dispositif (5) de balayage qui est disposé à l'intérieur d'une tête (A) de mesure portable, comporte au moins un miroir tournant autour d'un axe et par lequel le rayonnement laser ($f_1$) et les signaux lumineux infrarouges ($-\Delta f_3$) sont guidés ;
c) guidage des signaux lumineux infrarouges ($-\Delta f_3$) émis et guidés par le dispositif (5) de balayage jusqu'à un élément (6, 4a) d'extraction optique qui transmet les signaux lumineux infrarouges ($-\Delta f_3$) émis et atténue largement des parties du rayonnement laser ($f_1$) réfléchies à la surface de l'échantillon ;
d) transmission des signaux lumineux infrarouges ($-\Delta f_3$) découplés et focalisation sur les surfaces (8a) réceptrices d'au moins un détecteur (8) infrarouge qui convertit les signaux lumineux infrarouges reçus en signaux électriques correspondants aux fins du traitement ultérieur des signaux ; et
e) intégration d'une source (FL) de lumière laser dans le boîtier de la tête de mesure portable et guidage du rayonnement laser ($f_1$) de la source (FL) de lumière laser jusqu'à l'optique (6) de guidage terminale de rayonnement laser à l'intérieur de la tête (A) de mesure portable avec un premier degré de transmission et de réflexion résultant d'au moins 60% et guidage des signaux lumineux infrarouges ($-\Delta f_3$) émis par l'échantillon (B) de matériau jusqu'à un détecteur (8) infrarouge à l'intérieur de la tête (A) de mesure portable avec un deuxième degré de transmission et de réflexion résultant d'au moins 60%.

**2.** Procédé selon la revendication 1, caractérisé en ce qu'on utilise comme source (FL) de lumière laser un laser à solide à pompage par diodes.

**3.** Procédé selon la revendication 1, caractérisé en ce qu'on utilise comme source (FL) de lumière laser un laser à diode.

**4.** Procédé selon l'une des revendications 1 à 3, caractérisé en ce que l'échantillon (B') de matériau est exposé sur un côté frontal au rayonnement laser ($f_1$) suivant un dessin de trajectoire d'exposition et que les signaux lumineux infrarouges ($-\Delta f_4$) émis par la face arrière de l'échantillon (B') de matériau (dans le cas d'une faible épaisseur de paroi du matériau) sont balayés suivant un dessin de trajectoire de balayage.

**5.** Procédé selon l'une des revendications 1 à 3, caractérisé en ce que l'échantillon (B) de matériau est exposé au rayonnement laser ($f_1$) et est balayé du point de vue des signaux lumineux infrarouges ($-\Delta f_3$) qu'il émet sur le même côté et que les signaux lumineux infrarouges émis sont guidés vers l'élément d'extraction optique, sur une partie de leur trajet, sur la même trajectoire et à travers la même optique de guidage terminale de rayonnement laser, au nombre d'au moins une, que celles utilisées pour le guidage du rayonnement laser ($f_1$) suivant le dessin de la trajectoire d'exposition.

**6.** Procédé selon l'une des revendications 1 à 3 et 5, caractérisé en ce que l'élément (4a, 6) d'extraction optique comprend une optique (6) double qui laisse passer et focalise le rayonnement laser ($f_1$) en direction de l'échantillon (B) de matériau et laisse passer dans la direction opposée de préférence les signaux lumineux infrarouges ($-\Delta f_3$) émis.

7. Procédé selon l'une des revendications 1 à 6, caractérisé en ce que pour générer le dessin de trajectoire d'exposition au rayonnement laser ($f_1$), ce dernier passe par deux miroirs (5a, 5b) de balayage qui sont montés l'un derrière l'autre d'un point de vue optique et parmi lesquels l'un (5a) est tourné autour d'un premier axe (21) pour dévier le rayonnement dans la direction X et l'autre (5b) est tourné autour d'un deuxième axe (22) pour dévier le rayonnement dans la direction Y.

8. Procédé selon l'une des revendications 1 à 3 et 5 à 7, caractérisé en ce que l'élément (6, 4a) d'extraction optique comprend un miroir (4a) de couplage dichroïque et le rayonnement laser ($f_1$) est, dans la direction dirigée vers l'échantillon (B) de matériau, réfléchi par la surface réfléchissante active du miroir (4a) de couplage dans le trajet de rayonnement dirigé vers les miroirs (5a, 5b) de balayage alors que les signaux lumineux infrarouges ($-\Delta f_3$) arrivant dans la direction opposée au rayonnement laser ($f_1$) traversent le miroir (4a) de couplage agissant comme fenêtre dans cette direction.

9. Procédé selon l'une des revendications 1 à 8, caractérisé en ce que le rayonnement laser (f1) qui sort de la source (FL) de lumière laser traverse une première optique (1) qui élargit le rayonnement laser et fait partie d'une optique (1, 3) d'élargissement, puis est dévié deux fois de 90° par deux miroirs (2a, 2b) de déviation montés l'un derrière l'autre d'un point de vue optique de sorte qu'il est dirigé sur la surface active du miroir (4a) de couplage et se propage à partir de là par les deux miroirs (5a, 5b) de couplage vers l'optique (6) de guidage terminale de rayonnement laser qui le focalise sur les points de mesure situés sur l'échantillon (B) de matériau.

10. Procédé selon la revendication 9, caractérisé en ce que le rayonnement laser ($f_1$) est guidé par le deuxième (2b) des miroirs (2a, 2b) de déviation vers le miroir (4a) de couplage par l'intermédiaire d'une deuxième optique (3) qui fait partie de l'optique (1, 3) d'élargissement.

11. Procédé selon la revendication 9 ou 10, caractérisé en ce que le rayonnement pilote ($f_2$) d'un laser pilote (DL) est couplé dans le trajet du rayonnement laser ($f_1$) de sorte qu'avant le début du contrôle, c'est-à-dire de l'exposition de l'échantillon (B) de matériau au rayonnement laser ($f_1$), on dispose d'un spot lumineux pilote visible sur l'échantillon de matériau en vue de régler la zone (9) de balayage.

12. Procédé selon la revendication 11, caractérisé par l'utilisation d'un laser pilote (DL), de préférence d'un laser à diode, émettant dans le rouge visible.

13. Procédé selon la revendication 11 ou 12, caractérisé en ce que le rayonnement pilote (f2) est envoyé dans le trajet de rayonnement entre le deuxième miroir (2b) de déviation et le miroir (4a) de couplage et que le deuxième miroir (2b) de déviation laisse passer à cet effet comme une fenêtre le rayonnement pilote ($f_2$) qui arrive sur sa face arrière, tandis qu'il réfléchit sur le miroir (4a) de couplage le rayonnement laser ($f_1$) qui arrive sur sa face avant.

14. Procédé selon l'une des revendications 1 à 13, caractérisé en ce que le rayonnement laser ($f_1$) est modulé en vue d'obtenir le rapport d'impulsions souhaité.

15. Procédé selon l'une des revendications 1 à 14, caractérisé en ce que le rayonnement laser ($f_1$) est guidé sur la zone (9) de balayage suivant un dessin de trajectoire d'exposition orthogonal.

16. Procédé selon l'une des revendications 1 à 14, caractérisé en ce que le rayonnement laser ($f_1$) est guidé sur la zone (9) de balayage suivant un dessin de trajectoire d'exposition qui est formé par des trajectoires concentriques ou en forme de spirale.

17. Procédé selon la revendication 4, caractérisé en ce que les signaux lumineux infrarouges ($-\Delta f_4$) émis par la face arrière de l'échantillon (B') de matériau à paroi mince sont déviés de telle manière qu'ils coïncident avec la dernière partie du trajet des signaux lumineux infrarouges ($-\Delta f_3$) émis par le côté, tourné vers le laser, de l'échantillon de matériau qui est dirigée vers le détecteur (8) infrarouge.

18. Utilisation du procédé selon l'une des revendications 1 à 17 dans le cadre du contrôle non destructif de matériaux pour détecter des manques d'homogénéité du matériau, des défauts, des décollements interlaminaires ainsi que des phénomènes de corrosion et d'érosion, par exemple pour

- détecter des endommagements par fluage sous la forme de cavités dans des matériaux métalliques,
- contrôler des défauts sur

-- des composants électriques, tels que des puces, des semi-conducteurs, des photopiles,

-- des brasures,

-- des produits de l'industrie du papier en ce qui concerne l'épaisseur, la répartition des fibres, l'adhérence,

-- des produits de l'industrie des matières plastiques en ce qui concerne la porosité, la répartition des fibres et l'orientation, et

- pour le contrôle des processus.

19. Utilisation du procédé selon l'une des revendications 1 à 17 pour déterminer des structures de matériau, des grandeurs caractéristiques de matériau telles que par exemple la densité, la conductibilité, la chaleur spécifique, le degré de dureté et pour déterminer des états de matériau.

20. Utilisation du procédé selon l'une des revendications 1 à 17 pour mesurer des épaisseurs de couches, des revêtements, des qualités de surfaces, par exemple des profondeurs de rugosité, et pour mesurer l'adhérence de revêtements.

21. Utilisation du procédé selon l'une des revendications 1 à 17 pour rechercher des traces, par exemple des traces de doigt.

22. Utilisation du procédé selon l'une des revendications 1 à 17 pour détecter et mettre à jour des falsifications, par exemple dans des billets de banque, des tableaux, des alliages métalliques, des pièces de monnaie, des céramiques et des meubles anciens.

23. Dispositif pour la mise en oeuvre du procédé selon l'une des revendications 1 à 16, comportant une tête de mesure portable pourvue d'un boîtier compact, le boîtier présentant une paroi frontale, lequel dispositif comprend

a) une source de lumière laser logée dans le boîtier de la tête de mesure portable et dont le rayonnement laser ($f_1$) est guidé sans guides d'ondes, par l'intermédiaire de moyens (1, 2a, 2b, 3, 4a, 5a, 5b) de guidage de rayonnement internes au boîtier jusqu'à une optique (6) de guidage terminale de rayonnement laser ;

b) l'optique (6) de guidage terminale de rayonnement laser mentionnée, logée sur ou dans la paroi (A1) frontale du boîtier et réalisée sous forme d'optique double, laquelle optique laisse passer et focalise le rayonnement laser ($f_1$) en direction de l'échantillon (B) de matériau et laisse passer dans la direction opposée de préférence les signaux lumineux infrarouges ($-\Delta f_3$) émis par l'échantillon de matériau, l'optique (6) faisant partie d'un élément (6, 4a) d'extraction optique,

c) au moins un détecteur infrarouge, logé dans le boîtier de la tête de mesure et dont les surfaces réceptrices sont dirigées vers le point de focalisation d'un objectif infrarouge monté en amont d'un point de vue optique, pour convertir les signaux lumineux infrarouges en signaux électriques correspondants aux fins du traitement ultérieur des signaux, les moyens de guidage de rayonnement internes au boîtier comprenant un dispositif (5) à miroirs de balayage qui est monté en amont de l'optique de guidage terminale de rayonnement laser dans le trajet du rayonnement laser (f1) et est conçu pour dévier le rayonnement laser ($f_1$) suivant un dessin de trajectoire d'exposition et pour balayer les signaux lumineux infrarouges ($-\Delta f_3$) émis par l'échantillon (B) de matériau dans la zone de sa zone (9) de balayage suivant un dessin de trajectoire de balayage et les moyens de guidage du rayonnement laser ($f_1$) présentant un premier degré de transmission et de réflexion résultant d'au moins 60% et les moyens de guidage des signaux lumineux infrarouges ($-\Delta f_3$) présentant un deuxième degré de transmission et de réflexion résultant d'au moins 60%.

24. Dispositif selon la revendication 23, caractérisé en ce que les moyens de guidage de rayonnement internes au boîtier comprennent de plus :

a1) un miroir (4a) de couplage, réalisé sous forme de miroir dichroïque, qui est monté en amont du dispositif (5) à miroirs de balayage dans le trajet du rayonnement laser ($f_1$) et qui réfléchit dans la direction du rayonnement laser ($f_1$) et fonctionne dans la direction opposée comme une fenêtre transparente pour les signaux lumineux infrarouges ;

a2) un objectif (7) infrarouge qui est monté en amont du miroir (4a) de couplage dans une direction opposée à la direction du rayonnement laser ($f_1$), c'est-à-dire sur le côté du miroir (4a) de couplage tourné à l'opposé de la surface réfléchissante, et qui focalise les signaux lumineux infrarouges arrivant du miroir (4a) de couplage sur les surfaces (8a) réceptrices d'au moins un détecteur (8) infrarouge.

**25.** Dispositif selon la revendication 23 ou 24, caractérisé par au moins une unité (C) d'armoire électronique transportable, comprenant des premiers moyens (15, 17) de traitement électrique des signaux électriques fournis par le détecteur (8) infrarouge, au nombre d'au moins un, et des seconds moyens de commande de la tête de mesure, les premiers moyens comprenant au moins un étage (15) amplificateur électronique et une unité (17) de calcul électronique et les seconds moyens comprenant un module (16) de commande monté entre l'étage (15) amplificateur et l'unité (17) de calcul électronique, l'unité (17) de calcul électronique comportant au moins un écran (18) sur lequel on peut visualiser les données obtenues à partir des signaux lumineux infrarouges, rassemblées et traitées et le module (16) de commande produisant des signaux de commande destinés à régler les caractéristiques du rayonnement laser de la source (FL) de lumière laser, telles que le rapport des impulsions et la puissance, le dessin de la trajectoire d'exposition et le dessin de la trajectoire de balayage ainsi que la vitesse de balayage; au moins un câble d'alimentation électrique flexible pour transporter les signaux entre la tête (A) de mesure et l'unité (C) d'armoire électronique, et des moyens pour alimenter la tête (A) de mesure portable en énergie électrique fournie par une source d'alimentation en énergie.

**26.** Dispositif selon la revendication 25, caractérisé en ce que la tête (A) de mesure portable renferme un préamplificateur qui est monté en aval du détecteur infrarouge d'un point de vue électrique et dont la ligne (14) de signal de sortie va à l'étage (15) amplificateur de l'unité (C) d'armoire électronique.

**27.** Dispositif selon la revendication 25 ou 26, caractérisé en ce que l'étage (15) amplificateur est un amplificateur de blocage.

**28.** Dispositif selon l'une des revendications 23 à 27, caractérisé en ce que la tête (A) de mesure portable renferme un laser pilote (DL) dont le rayonnement pilote ($f_2$) peut être couplé dans le trajet du rayonnement laser ($f_1$) et qui sert à régler la zone (9) de balayage.

**29.** Dispositif selon la revendication 28, caractérisé en ce que le laser pilote (DL) émet dans le rouge visible.

**30.** Dispositif selon la revendication 28 ou 29, caractérisé en ce que le rayonnement pilote (f2) du laser pilote (DL) est dirigé sur le trajet, compris entre un deuxième miroir (2b) de déviation et le miroir (4a) de couplage, du rayonnement laser ($f_1$) de la source (FL) de lumière laser, le deuxième miroir (2b) de déviation formant une fenêtre de transmission du rayonnement pilote ($f_2$) arrivant sur sa face arrière et renvoyant celui-ci sur le miroir (4a) de couplage.

**31.** Dispositif selon l'une des revendications 23 à 30, caractérisé en ce qu'une unité (10) de refroidissement est prévue pour maintenir une zone de travail à basse température pour le détecteur infrarouge.

**32.** Dispositif selon l'une des revendications 28 à 30, caractérisé en ce que à la sortie de la source (FL) de lumière laser, deux miroirs (2a, 2b) de déviation montés l'un derrière l'autre d'un point de vue optique font suite, dans le trajet du rayonnement laser ($f_1$), à une première optique (1) qui fait partie d'une optique d'élargissement, lesquels miroirs guident le rayonnement laser ($f_1$) dans une trajectoire décalée dirigée sur le miroir (4a) de couplage, le laser pilote (DL) étant orienté de façon à émettre son rayonnement pilote ($f_2$) dans cette trajectoire décalée.

**33.** Dispositif selon la revendication 32, caractérisé en ce qu'une deuxième optique (3), qui fait partie de l'optique (1, 3) d'élargissement, est insérée dans le trajet de rayonnement entre le deuxième miroir (2b) de déviation et le miroir (4a) de couplage.

**34.** Dispositif selon l'une des revendications 23 à 33, caractérisé en ce qu'un miroir (4b) de déviation d'infrarouge est monté en aval du miroir (4a) de couplage dans le trajet du signal lumineux infrarouge ($-\Delta f_3$), lequel miroir de déviation d'infrarouge reçoit les signaux lumineux infrarouges qu'a laissé passer le miroir (4a) de couplage et les envoie en direction du détecteur (8) infrarouge ou sur un objectif (7) infrarouge monté en amont de celui-ci.

**35.** Dispositif selon l'une des revendications 23 à 34, caractérisé par une unité (A2) ) supplémentaire pour la tête (A) de mesure pour la mesure photothermique d'échantillons (B') de matériau à paroi relativement mince par réception des signaux lumineux infrarouges ($-\Delta f_4$) émis par la face arrière de l'échantillon (B') de matériau, comprenant une optique (26) infrarouge de réception des signaux lumineux infrarouges, un dispositif (27, 28) à miroirs de déviation pour dévier les signaux lumineux infrarouges dans un axe qui est aligné avec la surface (8a) réceptrice du détecteur (8) infrarouge.

**36.** Dispositif selon la revendication 35, caractérisé en ce que le miroir (4b) de déviation d'infrarouge monté en amont de l'objectif (7) infrarouge réfléchit les signaux lumineux infrarouges ($-\Delta f_3$) émis par le côté, tourné vers le laser, de l'échantillon de matériau et laisse passer les signaux lumineux infrarouges ($-\Delta f_4$) émis par le côté, tourné à l'opposé du laser, de l'échantillon de matériau.

**37.** Dispositif selon la revendication 35 ou 36, caractérisé en ce qu'un espace intermédiaire est prévu entre la tête (A) de mesure et l'unité (A2) supplémentaire pour insérer l'échantillon (B') de matériau à paroi mince et que le signal lumineux infrarouge ($-\Delta f_4$) reçu par l'unité (A2) ) supplémentaire peut être amené par une première optique (29) de guidage de lumière fermant le boîtier de manière étanche, de l'unité (A2) ) supplémentaire, dans l'espace intermédiaire puis, par une deuxième optique (30) de guidage de lumière fermant le boîtier de manière étanche dans le trajet des signaux lumineux infrarouges ($-\Delta f_3$) à l'intérieur de la tête (A) de mesure.

**38.** Microscope thermique

    a) comportant un laser (FL) destiné à émettre un rayonnement laser ($f_1$) à mode pur,
    b) une optique (6)

        b1) pour focaliser le rayonnement laser ($f_1$) sur un échantillon (B) de matériau en un point (b2) de mesure avec un diamètre de foyer inférieur ou égal à 10 $\mu$m et
        b2) ) pour renvoyer les signaux lumineux infrarouges ($-\Delta f_3$) émis par l'échantillon (B) de matériau,

    c) un dispositif (5 ; 5a, 5b) de balayage comportant au moins un miroir tournant autour d'un axe pour dévier le rayonnement laser ($f_1$) et le signal lumineux infrarouge ($-\Delta f_3$) émis,
    d) un élément (4a) d'extraction pour extraire les signaux lumineux infrarouges ($-\Delta f_3$),
    e) un détecteur (8) infrarouge qui est disposé à côté du laser (FL),
    f) un miroir (4b) de déviation pour dévier sur le détecteur (8) infrarouge les signaux lumineux infrarouges ($-\Delta f_3$) extraits par l'élément (4a) d'extraction,
    g) un boîtier dans lequel sont logés ensemble le laser (FL), le dispositif (5 ; 5a, 5b) de balayage, l'optique (6), l'élément (4a) d'extraction, le miroir (4b) de déviation et le détecteur (8) infrarouge, et h) une unité (13, 15, 17, 18) destinée à exploiter et à visualiser les signaux du détecteur (8) infrarouge.

**39.** Procédé selon la revendication 1, caractérisé en ce que le premier degré de transmission et de réflexion résultant pour le rayonnement laser ($f_1$) est compris entre 60 et 85% et est de préférence d'au moins 80%.

FIG 11

FIG 1

EP 0 394 932 B1

FIG 2

FIG 3

EP 0 394 932 B1

FIG 4

FIG 5

FIG 6

FIG 7

FIG 8

FIG 9

FIG 10